(19) Europäisches Patentamt European Patent Office Office européen des brevets

(11) **EP 4 769 995 A1**

(12) **EUROPEAN PATENT APPLICATION**
published in accordance with Art. 153(4) EPC

(43) Date of publication:
**01.07.2026 Bulletin 2026/27**

(21) Application number: **24871011.3**

(22) Date of filing: **27.09.2024**

(51) International Patent Classification (IPC):
**H04L 5/00** (2006.01)   **H04W 72/04** (2023.01)

(52) Cooperative Patent Classification (CPC):
**H04L 5/00; H04W 72/04; H04W 72/0446; H04W 72/1268**

(86) International application number:
**PCT/CN2024/121890**

(87) International publication number:
**WO 2025/067476 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311290302**

(71) Applicant: **Huawei Technologies Co., Ltd.**
**Shenzhen, Guangdong 518129 (CN)**

(72) Inventors:
• **GAO, Xiang**
  **Shenzhen, Guangdong 518129 (CN)**
• **ZHANG, Zhening**
  **Shenzhen, Guangdong 518129 (CN)**
• **LIU, Kunpeng**
  **Shenzhen, Guangdong 518129 (CN)**

(74) Representative: **Grünecker Patent- und**
**Rechtsanwälte**
**PartG mbB**
**Leopoldstraße 4**
**80802 München (DE)**

(54) **COMMUNICATION METHOD AND RELATED APPARATUS**

(57)   A communication method and a related apparatus are provided. In the method, a network device respectively configures a first resource set and a second resource set for a terminal device by using first information and second information, where the first resource set and the second resource set have a resource overlap on at least one time domain symbol or do not overlap; and a PUSCH used by the terminal device to perform uplink transmission includes a first resource in the first resource set other than the second resource set, and a second resource in the second resource set. Therefore, the network device may configure resources for the first resource set and the second resource set by using different granularities. For example, the first resource set may be configured by using a plurality of time domain symbols as a granularity, and the second resource set may be configured by using one time domain symbol as a granularity. Therefore, more flexible resource configuration can be implemented, and idle resource fragments can be fully used. This helps improve resource utilization.

FIG. 6

## Description

This application claims priority to Chinese Patent Application No. 202311290302.2, filed with the China National Intellectual Property Administration on September 28, 2023 and entitled "COMMUNICATION METHOD AND RELATED APPARATUS", which is incorporated herein by reference in its entirety.

## TECHNICAL FIELD

This application relates to the field of wireless communication, and in particular, to a communication method and a related apparatus.

## BACKGROUND

When scheduling a terminal device to perform uplink transmission, a network device usually indicates a position of a physical uplink shared channel (physical uplink shared channel, PUSCH) by using scheduling signaling (for example, downlink control information (downlink control information, DCI)).

Currently, there are two frequency domain resource configuration types when the network device performs uplink scheduling. In one configuration type, the network device may indicate a frequency domain resource assignment position by using a bitmap (bitmap). This type may support non-contiguous frequency domain resource assignment, but this type currently does not support symbol-granularity configuration. In the other configuration type, the network device may indicate a frequency domain resource position by using a start frequency domain position and a length of a contiguous frequency domain subband. This type may support contiguous frequency domain resource assignment.

Currently, neither of the two frequency domain resource configuration types supports symbol-level frequency domain resource assignment. To be specific, in a plurality of scheduled symbols, frequency domain units for mapping data are the same. Therefore, scheduling for the PUSCH by the network device is not flexible enough.

## SUMMARY

This application provides a communication method and a related apparatus, to schedule a PUSCH more flexibly, thereby improving resource utilization.

According to a first aspect, a communication method is provided. The method may be applied to a terminal device. For example, the method may be performed by the terminal device, or may be performed by a component (such as a chip, a chip system, or a processor) configured in the terminal device, or may be implemented by a logical module or software that can implement all or some functions of the terminal device. This is not limited in this application.

For example, the method includes: receiving first information, where the first information is used to configure a first resource set, and the first resource set occupies at least one time domain symbol in time domain; receiving second information, where the second information is used to configure a second resource set, the second resource set occupies at least one time domain symbol in time domain, and the first resource set and the second resource set have a resource overlap on at least one time domain symbol, or the first resource set and the second resource set do not overlap; and performing uplink transmission on a PUSCH, where the PUSCH includes a first resource and a second resource, the first resource is a resource in the first resource set other than the second resource set, and the second resource is a resource in the second resource set.

According to a second aspect, a communication method is provided. The method may be applied to a network device. For example, the method may be performed by the network device, or may be performed by a component (such as a chip, a chip system, or a processor) configured in the network device, or may be implemented by a logical module or software that can implement all or some functions of the network device. This is not limited in this application.

For example, the method includes: sending first information, where the first information is used to configure a first resource set; sending second information, where the second information is used to configure a second resource set, and the first resource set and the second resource set have a resource overlap on at least one time domain symbol, or the first resource set and the second resource set do not overlap; and performing uplink transmission on a PUSCH, where the PUSCH includes a first resource and a second resource, the first resource is a resource in the first resource set other than the second resource set, and the second resource is a resource in the second resource set.

That the first resource is a resource in the first resource set other than the second resource set may specifically mean that the first resource is a resource in the first resource set other than the second resource set when the first resource set and the second resource set have a resource overlap. That is, at a position at which the first resource set and the second resource set have a resource overlap, a resource in the second resource set may be preferentially configured for the PUSCH for use, instead of using a resource in the first resource set.

In this application, the network device divides the PUSCH into two parts for configuration, that is, the first resource set and the second resource set. The first resource set and the second resource set may be configured by using the first information and the second information respectively. Therefore, the first resource set and the second resource set may have different resource occupation statuses, in other words, may have different resource distribution statuses. The network device may configure resources for the first resource set and the second resource set by using different granularities. For example, the first resource set may be configured by using a plurality of time domain symbols as a granularity, and the second resource set may be configured by using one time domain symbol as a granularity. In this way, frequency domain resources scheduled on different time domain symbols may be the same or may be different. In this way, more flexible resource configuration can be implemented. Even if there may be some idle resource fragments in some scenarios, resource configuration may be performed by using this method, to fully utilize the resource fragments, thereby helping improve resource utilization.

With reference to the first aspect or the second aspect, in some possible implementations, the second resource set includes one or more groups of resources, the second information indicates one or more groups of configuration parameters, and each group of configuration parameters is used to configure one group of resources in the one or more groups of resources. Each group of configuration parameters indicates one or more of the following: a frequency domain shift, an index in a preset table, a parameter $b_{hop}$, a time domain start position, a quantity of time domain symbols, or a repetition factor R, where the frequency domain shift is a quantity of frequency domain units by which a frequency domain start position of one group of resources configured by using each group of configuration parameters is shifted relative to a reference frequency domain position, the preset table is used to define a value of a parameter $m_b$ and/or a value of a parameter $N_b$ corresponding to each of at least one index value, the parameter $m_b$ indicates a quantity of frequency domain units included in a contiguous bandwidth occupied on one time domain symbol by one group of resources configured by using each group of configuration parameters, the parameter $N_b$ is a ratio of a quantity of frequency domain units included in a previous-level bandwidth corresponding to the value of the parameter $m_b$ in the preset table to the quantity of frequency domain units included in the contiguous bandwidth corresponding to the value of the parameter $m_b$, b is an integer value ranging from 0 to B, $0 \leq B < B_{max}$, a value of $B_{max}$ is defined in the preset table, the parameter $b_{hop}$ indicates a bandwidth occupied by one group of resources configured by using each group of configuration parameters, the time domain start position indicates a start time domain symbol of one group of resources configured by using each group of configuration parameters in time domain, the quantity of time domain symbols indicates a quantity of consecutive time domain symbols occupied by one group of resources configured by using each group of configuration parameters, and the repetition factor indicates a quantity of consecutive time domain symbols that occupy a same frequency domain resource in one group of resources configured by using each group of configuration parameters.

It is not difficult to learn that the configuration parameter in the example herein is similar to a configuration parameter of a sounding reference signal (sounding reference signal, SRS) resource (SRS resource). Because both the PUSCH and the SRS resource are uplink resources, to avoid interference to the SRS, the network device needs to avoid the SRS resource when scheduling the PUSCH. The SRS resource usually occupies different frequency domain units on different time domain symbols, which means frequency hopping transmission. If a configuration parameter of each group of resources in the second resource set is designed as a configuration parameter similar to that of the SRS resource, the PUSCH may be scheduled based on a mode of the SRS resource. Therefore, frequency domain resource assignment at a time domain symbol level can be implemented, and a collision with the SRS resource can be avoided.

In this solution, for a frequency domain resource on a time domain symbol other than the time domain symbol occupied by the SRS resource, the network device may perform configuration based on an existing frequency domain resource configuration type. In addition, because there is no conflict with the SRS resource, configuration may be performed based on a relatively large time domain granularity. A resource configured in this way is the first resource. For a frequency domain resource on the time domain symbol occupied by the SRS resource, because the second resource set can implement frequency domain resource assignment at a time domain symbol level, the network device may select, from the preconfigured second resource set with reference to a distribution status of the SRS resource, a resource that does not overlap the SRS resource as the second resource. In this way, the first resource may be configured by using small signaling overheads at a position at which there is no conflict with the SRS resource, and the second resource may be configured in a configuration manner similar to that of the SRS resource on a time domain symbol that may conflict with the SRS resource. Therefore, scheduling of the PUSCH is more flexible, and this helps improve resource utilization.

With reference to the first aspect or the second aspect, in some possible implementations, the second resource is from a target resource, and the target resource is one group of resources in the one or more groups of resources.

In other words, the target resource is one group of resources in the second resource set. It may be understood that when the second resource set includes one group of resources, the group of resources is the target resource. When the second resource set includes a plurality of groups of resources, the target resource may be one of the plurality of groups of resources.

Optionally, in some possible implementations of the first aspect, the method further includes: receiving third information from the network device, where the third information indicates a target configuration parameter in the one or more groups of configuration parameters, and the target configuration parameter is used to configure the target resource.

Correspondingly, in some possible implementations of the second aspect, the method further includes: sending third information to the terminal device, where the third information indicates a target configuration parameter in the one or more groups of configuration parameters, and the target configuration parameter is used to configure the target resource.

The network device indicates the target configuration parameter to the terminal device by using the third information, so that the terminal device determines the target resource, and further determines the second resource from the target resource.

With reference to the first aspect or the second aspect, in some possible implementations, a resource occupied by the second resource in the target resource is determined based on a start position and a quantity of frequency domain units included in a contiguous bandwidth of the second resource on one time domain symbol.

When the contiguous bandwidth of the second resource on one time domain symbol includes a plurality of frequency domain units, the PUSCH may be transmitted on a plurality of consecutive frequency domain units on one time domain symbol, and frequency domain units occupied on different time domain symbols may be the same or may be different. Therefore, the contiguous bandwidth of the second resource on one time domain symbol may be understood as a frequency hopping bandwidth of the PUSCH, and the terminal device may perform frequency hopping transmission of the PUSCH on the frequency hopping bandwidth.

After determining the target resource, the terminal device may further determine the second resource with reference to the frequency hopping bandwidth and the start position, that is, determine a frequency domain resource occupied by the PUSCH on at least one time domain symbol occupied by the target resource.

Optionally, the start position is indicated by an index of a subband corresponding to a start frequency domain unit of the second resource in the target resource, the target resource includes one or more subbands, and a quantity of frequency domain units included in each subband is the same as the quantity of frequency domain units included in the contiguous bandwidth. At least one of the quantity of frequency domain units included in the contiguous bandwidth or the start position is predefined, or at least one of the quantity of frequency domain units included in the contiguous bandwidth or the start position is configured by the network device.

Because SRS resources configured by the network device for different terminal devices may be different (for example, different SRS bandwidths, SRS periods, and SRS resource positions), the network device may select, in real time based on the configured SRS resource, an appropriate position for the terminal device as the second resource or as the PUSCH. In this way, although the second resource may occupy a same time domain symbol on the SRS resource, the second resource may still be distinguished by using different frequency domain positions, thereby avoiding interference caused by uplink data transmission to the SRS.

Therefore, in a possible design, the quantity of frequency domain units included in the contiguous bandwidth and the start position are configured by the network device. The network device may indicate, by using physical layer signaling (for example, DCI), the quantity of frequency domain units included in the contiguous bandwidth and the start position, to dynamically schedule the second resource for the terminal device.

In an example, the second information is carried in a radio resource control (radio resource control, RRC) message, and information indicating the quantity of frequency domain units included in the contiguous bandwidth and the start position herein is carried in DCI. That is, the network device may first configure the second resource set by using higher layer signaling, and then select a part of resources from the second resource set to be configured as the second resource by using physical layer signaling. This is similar to two-level time domain resource assignment.

Certainly, the quantity of frequency domain units included in the contiguous bandwidth and/or the start position may be alternatively predefined in a protocol. In this way, signaling overheads can be reduced.

With reference to the first aspect or the second aspect, in some possible implementations, a shift $n_{offset}^{FH}$ of a start frequency domain unit of the second resource on an $n$th group of time domain symbols in the target resource relative to a frequency domain start position of the target resource satisfies $n_{offset}^{FH} = \sum_{b=0}^{B} m_b n_b$, where the $n$th group of time domain symbols includes R time domain symbols that are consecutive in time domain, a value of $n$ satisfies $0 \leq n \leq \left\lceil \dfrac{N_t}{R} \right\rceil - 1$, $N_t$ represents the quantity of time domain symbols, R represents the repetition factor, $N_t$ and R are positive integers, and a value of $n_b$ is related to $N_b$.

In another possible implementation, a value of $n$ in the $n$th group of time domain symbols may also satisfy $0 \leq n \leq \left\lfloor \dfrac{N_t}{R} \right\rfloor - 1$. This is not limited in this application.

An example in which the value of $n_b$ is related to $N_b$ is as follows: $n_b$ satisfies $n_b = \left\lfloor 4n_{RRC} / m_b \right\rfloor \bmod N_b$ when

$b \leq b_{\text{hop}}$ or satisfies $n_b = \left( F_b(n) \right) + \left\lfloor 4 n_{\text{RRC}} / m_b \right\rfloor \bmod N_b$ when $b > b_{\text{hop}}$, $n_{\text{RRC}}$ is used to determine the start position, and

$F_b(n)$ satisfies $F_b(n) = (N_b / 2) \left\lfloor \dfrac{n \bmod \Pi_{b'=b_{\text{hop}}}^{b} N_{b'}}{\Pi_{b'=b_{\text{hop}}}^{b-1} N_{b'}} \right\rfloor + \left\lfloor \dfrac{n \bmod \Pi_{b'=b_{\text{hop}}}^{b} N_{b'}}{2 \Pi_{b'=b_{\text{hop}}}^{b-1} N_{b'}} \right\rfloor$ when $N_b$ is an even number or

satisfies $F_b(n) = \left\lfloor N_b / 2 \right\rfloor \left\lfloor n / \Pi_{b'=b_{\text{hop}}}^{b-1} N_{b'} \right\rfloor$ when $N_b$ is an odd number.

The $n^{\text{th}}$ group of time domain symbols may include one or more consecutive time domain symbols, a quantity of time domain symbols included in one group of time domain symbols may be determined based on the repetition factor R, and frequency domain units on each group of time domain symbols are the same. A frequency domain resource occupied by the second resource on each time domain symbol may be determined by determining a position of the start frequency domain unit on the $n^{\text{th}}$ group of time domain symbols.

It should be understood that, in the formula in the foregoing example, the shift $n_{\text{offset}}^{FH}$ is specifically a shift at a resource block (resource block, RB) level. In another possible implementation, the shift may be alternatively defined as a shift at a subcarrier level. In this case, $n_{\text{offset}}^{FH}$ satisfies $n_{\text{offset}}^{FH} = \sum_{b=0}^{B} m_b N_{SC}^{RB} n_b$, and $N_{SC}^{RB}$ represents a quantity of subcarriers (subcarrier, SC) included in one RB.

With reference to the first aspect or the second aspect, in a possible design, the preset table includes rows corresponding to one or more index values in the following table:

| $C$ | $B = 0$ | | $B = 1$ | | $B = 2$ | | $B = 3$ | |
|---|---|---|---|---|---|---|---|---|
| | $m_0$ | $N_0$ | $m_1$ | $N_1$ | $m_2$ | $N_2$ | $m_3$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |

$C$ represents an index, and a value of $C$ is an index value. Table 3 lists index values 0 to 63, which are 64 index values in total. The previous-level bandwidth corresponding to the parameter $m_b$ in the preset table is a bandwidth corresponding to a parameter $m_{b-1}$ corresponding to a same index value, and $B_{\text{max}}$ is 4.

In an example, the preset table may be rows corresponding to one or more index values (for example, one or more values in 0 to 63) in Table 3 below. Because detailed descriptions are provided below with reference to Table 3, for brevity, details are not shown herein.

With reference to the first aspect or the second aspect, in another possible design, the preset table includes at least one index value and at least one pattern corresponding to each index value; in the at least one pattern, different patterns correspond to different values of the parameter $m_b$ and/or different patterns correspond to different values of the parameter $N_b$; and the previous-level bandwidth corresponding to the parameter $m_b$ in the preset table is a bandwidth corresponding to a parameter $m_{b-1}$ corresponding to a same index value.

The preset table is simpler than the table in the previous design, so that storage overheads during storage in a device can be reduced.

Optionally, in the preset table, $B_{\text{max}}$ is 2, and the parameter $m_b$ and the parameter $N_b$ satisfy at least one of the following relationships:

a value of the parameter $m_0$ is $\left\lfloor \dfrac{X}{W} \right\rfloor \cdot W$, and a value of the parameter $N_0$ is 1; or

a value of the parameter $m_1$ is $W$ RBs, and a value of the parameter $N_1$ is $\left\lfloor \dfrac{X}{W} \right\rfloor$ .

$W$ is a quantity of RBs included in a predefined contiguous bandwidth, $X$ is a quantity of RBs included in a total bandwidth occupied by the target resource, $X$ is greater than or equal to $W$, and both $W$ and $X$ are positive integers.

In an example, the preset table may be shown in Table 4 below. Because detailed descriptions are provided below with reference to Table 4, for brevity, details are not shown herein. It should be understood that the foregoing two example possible designs of the preset table are merely shown for ease of understanding. This application does not limit specific values in each preset table. A person skilled in the art may adjust the foregoing table based on a same concept, for example, adjust a value, add or delete one or more rows, and add or delete one or more columns. This application includes but is not limited thereto.

According to a third aspect, a communication apparatus is provided, and can implement the communication method according to any one of the first aspect and the possible implementations of the first aspect. The communication apparatus includes a corresponding unit or module for performing the foregoing method. The unit or the module included in the communication apparatus may be implemented by using software and/or hardware.

According to a fourth aspect, a communication apparatus is provided, including a processor. The processor is configured to perform the communication method according to any one of the first aspect and the possible implementations of the first aspect.

Optionally, the communication apparatus may further include a memory, configured to store instructions and data. The memory is coupled to the processor, and when executing the instructions stored in the memory, the processor may implement the method described in the foregoing aspects.

Optionally, the communication apparatus may further include a communication interface. The communication interface is used by the apparatus to communicate with another device. For example, the communication interface may be a transceiver, a circuit, a bus, a module, or a communication interface of another type.

In a possible design, the communication apparatus in the third aspect or the fourth aspect is a terminal device, or a component in a terminal device, such as a chip, a chip system, or a processor.

According to a fifth aspect, a chip system is provided. The chip system includes at least one processor, configured to support implementation of the function in any one of the first aspect and the possible implementations of the first aspect, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a sixth aspect, a communication apparatus is provided, and can implement the communication method according to any one of the second aspect and the possible implementations of the second aspect. The communication apparatus includes a corresponding unit or module for performing the foregoing method. The unit or the module included in the communication apparatus may be implemented by using software and/or hardware.

According to a seventh aspect, a communication apparatus is provided, including a processor. The processor is configured to perform the communication method according to any one of the second aspect and the possible implementations of the second aspect.

Optionally, the communication apparatus may further include a memory, configured to store instructions and data. The memory is coupled to the processor, and when executing the instructions stored in the memory, the processor may implement the method described in the foregoing aspects.

Optionally, the communication apparatus may further include a communication interface. The communication interface is used by the apparatus to communicate with another device. For example, the communication interface may be a transceiver, a circuit, a bus, a module, or a communication interface of another type.

In a possible design, the communication apparatus in the sixth aspect or the seventh aspect is a network device, or a component in a network device, such as a chip, a chip system, or a processor.

According to an eighth aspect, a chip system is provided. The chip system includes at least one processor, configured to support implementation of the function in any one of the second aspect and the possible implementations of the second aspect, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a ninth aspect, a computer-readable storage medium is provided. The computer-readable storage medium stores a computer program. When the computer program is run on a computer, the method in any one of the first aspect or the second aspect and the possible implementations of the first aspect or the second aspect is performed.

According to a tenth aspect, a computer program product is provided. The computer program product includes a computer program (which may also be referred to as code or instructions). When the computer program is run, the method in any one of the first aspect or the second aspect and the possible implementations of the first aspect or the second aspect is performed.

According to an eleventh aspect, an embodiment provides a communication system, including the foregoing terminal device and network device.

It should be understood that, the third aspect to the eleventh aspect of this application correspond to the technical solutions of the first aspect and the second aspect of this application, and beneficial effects achieved in the aspects and corresponding feasible implementations are similar. Details are not described again.

## BRIEF DESCRIPTION OF DRAWINGS

FIG. 1 is a diagram of a communication system applicable to a communication method according to an embodiment of this application;

FIG. 2 is a diagram of a tree structure corresponding to $C_{SRS}$=18 in an SRS bandwidth configuration table;

FIG. 3 is a diagram of a frequency domain position occupied by SRS frequency hopping transmission;

FIG. 4 is a diagram of an SRS resource and a PUSCH scheduled based on a frequency domain resource configuration type 0 (type 0);

FIG. 5 is a diagram of an SRS resource and a PUSCH scheduled based on a frequency domain resource configuration type 1 (type 1);

FIG. 6 is a schematic flowchart of a communication method according to an embodiment of this application;

FIG. 7 is a diagram of resource overlapping between a first resource set and a second resource set;

FIG. 8 is a diagram in which a first resource set and a second resource set do not overlap;

FIG. 9 is a diagram of one group of resources in a second resource set according to an embodiment of this application;

FIG. 10 is a diagram of a second resource determined based on a frequency hopping bandwidth and a start position of the second resource;

FIG. 11 is a diagram of a first resource and a second resource determined by using a method provided in this application;

FIG. 12A is a diagram of an SRS resource and a PUSCH determined by using a method provided in this application;

FIG. 12B is another diagram of an SRS resource and a PUSCH determined by using a method provided in this application;

FIG. 13 is a block diagram of a communication apparatus according to an embodiment of this application;

FIG. 14 is another block diagram of a communication apparatus according to an embodiment of this application;

FIG. 15 is a diagram of a structure of a terminal device according to an embodiment of this application; and

FIG. 16 is a diagram of a structure of a network device according to an embodiment of this application.

## DESCRIPTION OF EMBODIMENTS

The following describes technical solutions of this application with reference to accompanying drawings.

For ease of understanding of embodiments of this application, the following descriptions are first provided.

First, a resource in this application may be understood as a time-frequency resource. The time-frequency resource includes a time-frequency unit set including a plurality of frequency domain units and/or time domain units. The time domain unit may be a time domain symbol, a slot (slot), a radio frame (frame), a set including one or more time domain symbols or slots, or the like. The frequency domain unit may be an RB, a resource block group (resource block group, RBG), a subcarrier, a set including one or more subcarriers or RBs, or the like. This is not limited in this application.

In embodiments of this application, for ease of understanding and description, the time domain symbol is used as an example of the time domain unit and the RB or the RBG is used as an example of the frequency domain unit for description. The time domain symbol may be, for example, an orthogonal frequency division multiplexing (orthogonal frequency division multiplexing, OFDM) symbol. In addition, in this specification, a plurality of accompanying drawings are described by using the time domain symbol as the time domain unit and using the RB or the RBG as the frequency domain unit. These accompanying drawings are shown merely for ease of understanding, and shall not constitute any limitation on this application.

Second, in embodiments of this application, a second resource set includes one or more groups of resources. A frequency hopping bandwidth of a PUSCH is a frequency hopping bandwidth of each group of resources in the second resource set determined based on the method provided in this solution, and may be specifically determined by a value of a parameter $B$. Frequency hopping transmission of the PUSCH is transmission performed on the frequency hopping bandwidth of each group of resources in the second resource set determined based on the method provided in this solution, and may be specifically determined by a value relationship between a value of a parameter $b_{hop}$ and the value of the parameter $B$.

Third, in embodiments of this application, a plurality of tables are shown as an example of a preset table. These tables are shown merely for ease of understanding, and shall not constitute any limitation on this application. In practical application, the preset table may include more rows or columns or fewer rows or columns than those in the example table in this specification. Values in the table are merely examples, and may be configured as other values. In addition, the table is merely a representation form of a correspondence, and may be replaced with another form that can be understood by a terminal device and a network device. This is not limited in this application.

Fourth, in embodiments of this application, a plurality of parameters and a plurality of accompanying drawings are shown. In some accompanying drawings, numbers of time domain symbols and numbers of frequency domain units start from 0. For some other parameters, this specification provides value ranges as examples, and these value ranges may start from 0. A person skilled in the art may understand that these numbers and value ranges are merely examples for ease of understanding and description. In another implementation, numbers may start or value ranges may be given from another value (for example, 1).

Fifth, in embodiments of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof refers to any combination of these items, including a single item (piece) or any combination of a plurality of items (pieces). For example, at least one (piece) of a, b, or c may represent a, b, c, a and b, a and c, b and c, or a, b, and c. Herein, a, b, and c may be singular or plural.

Sixth, in embodiments of this application, prefix words such as "first" and "second" are merely used for distinguishing and describing different things belonging to a same name category, and are not intended to constrain a sequence, sizes, or a quantity of things. For example, "first resource" and "second resource" are merely different resources, and a size or position relationship between the resources is not limited. For another example, "first information" and "second information" are merely different information, and there is no time sequence relationship, a size relationship, or a priority relationship between the two.

Seventh, "sending" and "receiving" in embodiments of this application represent signal transfer directions. For example, "sending information to a terminal device" may be understood as that a destination end of the information is the terminal device, and may include direct sending through an air interface, or include indirect sending through an air interface by another unit or module. "Receiving information from a network device" may be understood as that a source end of the configuration information is the network device, and may include direct receiving from the network device through an air interface, or may include indirect receiving from the network device via another unit or module through an air interface. "Sending" may alternatively be understood as "outputting" of a chip interface, and "receiving" may alternatively be understood as "inputting" of the chip interface.

In other words, sending and receiving may be performed between devices, for example, between a network device and a terminal device, or may be performed within a device. For example, sending or receiving is performed between components, assemblies, chips, software modules, or hardware modules in a device by using a bus, a cable, or an interface.

It may be understood that, before the information is sent from the source end to the destination end, necessary processing such as encoding and modulation may be performed. After receiving the information from the source end, the destination end may also perform corresponding processing such as decoding and demodulation, to interpret valid information from the source end. Similar expressions in this application may be understood similarly. Details are not described again.

Eighth, predefinition in this application may be understood as definition, preliminary definition, storage, pre-storage, pre-negotiation, preconfiguration, solidifying, or pre-burning.

Ninth, storage in this application may mean storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Tenth, signaling in this application may be, for example, higher layer signaling such as a radio resource control (radio resource control, RRC) message or a medium access control (medium access control, MAC)-control element (control element, CE); or may be physical layer signaling such as DCI. This is not limited in this application.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system. Certainly, the technical solutions provided in this application may be further applicable to another possible communication system, for example, applied to an internet of things (internet of things, IoT) network, and a wireless local area network system supporting the 802.11 series protocols; may be further applied to a wireless personal area network system based on ultra-wideband (ultra-wideband, UWB); may be further applied to a sensing (sensing) system; and may be further applied to vehicle-to-everything (vehicle-to-everything, V2X), machine type communication (machine type communication, MTC), machine-to-machine information exchange (long term evolution-machine, LTE-M), machine-to-machine (machine-to-machine, M2M) communication, vehicle-to-vehicle (vehicle-to-vehicle, V2V) communication, internet of vehicles (long term evolution-vehicle, LTE-V) communication, a satellite communication system, and the like. The foregoing communication system applicable to this application is only an example for description, and the communication system applicable to this application is not limited thereto. This is uniformly described herein, and details are not described below again.

The terminal device may also be referred to as user equipment (user equipment, UE), an access terminal, a subscriber unit, a subscriber station, a mobile station, a remote station, a remote terminal, a mobile device (mobile equipment, ME), a user terminal, a terminal, a wireless communication device, a user agent, or a user apparatus.

The terminal device is a device having wireless sending and receiving functions. The terminal device may communicate with one or more core network (core network, CN) devices (or referred to as core devices) through an access network device (or referred to as an access device) in a radio access network (radio access network, RAN). The terminal device may be deployed on land, and include an indoor or outdoor terminal, a handheld terminal, or a vehicle-mounted terminal; or may be deployed on a water surface (for example, on a ship); or may be deployed in the air (for example, on an aircraft, a balloon, or a satellite). In embodiments of this application, the terminal device may also be referred to as user equipment (user equipment, UE), and may be a mobile phone (mobile phone), a mobile station (mobile station, MS), a tablet computer (pad), a computer with wireless receiving and sending functions, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a subscriber unit (subscriber unit), a cellular phone (cellular phone), a wireless data card, a personal digital assistant (personal digital assistant, PDA) computer, a tablet computer, a laptop computer (laptop computer), an MTC terminal device, an uncrewed aerial vehicle, or the like. The terminal device may include various handheld devices having a wireless communication function, an in-vehicle device, a wearable device, a compute device, or another processing device connected to a wireless modem. Optionally, the terminal device may be a handheld device (handset) with a wireless communication function, a terminal device in an internet of things or an internet of vehicles, a terminal device of any form in 5G and a communication system evolved after 5G, or the like. This is not limited in this application.

In addition, the terminal device may alternatively be a terminal device in an IoT system, and may be referred to as an IoT node. IoT is an important part of future information technology development. A main technical feature of IoT is that an article is connected to a network by using a communication technology, to implement an intelligent network of man-machine interconnection and interconnection between things. The connection may be implemented by using a broadband technology or a narrowband (narrowband, NB) technology. The IoT technology can implement massive connections, deep coverage, and terminal power saving by using, for example, a narrowband technology.

In addition, the terminal device may alternatively include a sensor such as an intelligent printer, a train detector, or a gas station. Main functions include collecting data, receiving control information and downlink data from a network device, sending an electromagnetic wave, and transmitting uplink data to the network device.

In embodiments of this application, an apparatus configured to implement a function of a terminal device may be a terminal device, or may be an apparatus that can support a terminal device in implementing the function, for example, a chip system. The apparatus may be installed in the terminal device or used in matching with the terminal device. In embodiments of this application, the chip system may include a chip, or may include a chip and another discrete component. In embodiments of this application, only an example in which the apparatus for implementing the function of the terminal device is a terminal device is used for description, and constitutes no limitation on the solutions in embodiments of this application.

The access network device may be any device that has wireless receiving and sending functions and can communicate with a terminal device, for example, a RAN node that connects the terminal device to a wireless network. Currently, some examples of the RAN node include: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro (macro) base station, a micro (micro) base station, a relay (relay) node, a donor node, a similar object, or a combination thereof, or a radio controller in a cloud radio access network (cloud radio access network, CRAN) scenario, a node in an open radio access network (open radio access network, O-RAN or ORAN) scenario, or the like. The base station may alternatively be a communication module, a modem, or a chip that is disposed in the foregoing device or apparatus. The base station may alternatively be a mobile switching center, a device that undertakes a base station function in D2D, V2X, or M2M communication, a network side device in a 6G network, a device that undertakes a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). Neither of a specific technology and a specific device form used by the network device is limited in embodiments of this application. In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio frequency unit, for example, included in an RRU, an AAU, or an RRH.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of the software module and the hardware module.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus can be installed in the network device, or can match the network device for use. In embodiments of this application, only an example in which the apparatus for implementing the function of the network device is a network device is used for description, and constitutes no limitation on the solutions in embodiments of this application.

The network device and/or the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

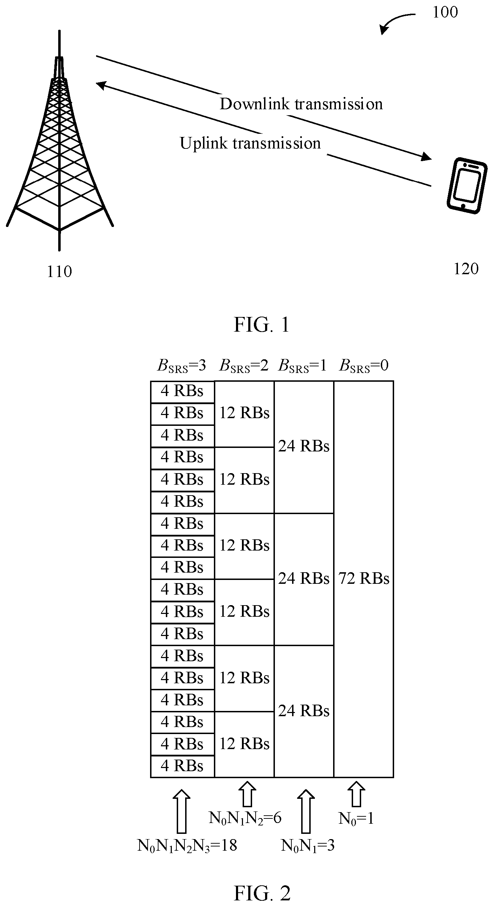

FIG. 1 is a diagram of an architecture of a communication system 100 applicable to a method according to this application. As shown in FIG. 1, the communication system 100 includes a network device 110 and a terminal device 120. The network device and the terminal device may be connected to each other in a wired or wireless manner. That the network device sends data and/or signaling to the terminal device may be referred to as downlink transmission, and that the terminal device sends data and/or signaling to the network device may be referred to as uplink transmission.

The network device 110 may be a base station deployed in the air, for example, may be a satellite base station; or may be a base station deployed indoors, for example, may be a micro base station or an indoor base station. It should be understood that a specific technology and a specific device form that are specifically used for the radio access network device are not limited in this application. For ease of description, the following provides descriptions by using an example in which the radio access network device is a base station.

The terminal device may be a terminal device deployed in the air, for example, a helicopter or an uncrewed aerial vehicle; or may be a terminal device deployed on land, for example, a mobile phone, a vehicle, a computer, or a printer.

Optionally, the terminal device may be configured to serve as a base station. For example, the terminal device may serve as a scheduling entity that provides a sidelink signal between terminal devices in vehicle-to-everything (vehicle-to-everything, V2X), device-to-device (device-to-device, D2D), peer-to-peer (peer-to-peer, P2P), or the like.

The base station and the terminal device may be fixed or movable. The base station and the terminal device may be deployed on land, including an indoor or outdoor device, a handheld device, or a vehicle-mounted device; or may be deployed on a water surface; or may be deployed on a plane, a balloon, or an artificial satellite in the air. Application scenarios of the base station and the terminal device are not limited in embodiments of this application.

FIG. 1 is merely a diagram. The communication system 100 may further include other network devices and/or terminal devices, and may further include a wireless relay device, a wireless backhaul device, and the like, which are not shown in FIG. 1.

In embodiments of this application, the function of the network device may alternatively be performed by a module (for example, a chip) in the network device, or may be performed by a control subsystem including the function of the network device. The control subsystem including the function of the network device herein may be a control center in the foregoing terminal application scenarios such as smart grid, industrial control, smart transportation, and smart city. The function of the terminal device may alternatively be performed by a module (for example, a chip) in the terminal device, or may be performed by an apparatus including the function of the terminal device. This is not limited in this application.

Currently, when performing uplink scheduling, a network device may indicate a position of a PUSCH by using scheduling signaling (for example, DCI). Using NR as an example, NR currently supports the following two frequency domain resource configuration types.

One configuration type is a type 0 (type 0) defined in the standard: A frequency domain resource assignment position is indicated by using a bitmap (bitmap). This type may support non-contiguous frequency domain resource assignment. The bitmap may indicate, by using a string of bit sequence, whether a frequency domain subband corresponding to each bit is scheduled. The frequency domain subband is a frequency domain basic granularity for scheduling, and may be referred to as a resource block group (resource block group, RBG). One RBG may include one or more RBs. For example, a size of the RBG (that is, a quantity of RBs included in one RBG) is related to a size of a bandwidth part (bandwidth part, BWP), as shown in Table 1.

Table 1

| Size of a BWP | Configuration 1 | Configuration 2 |
|---------------|-----------------|-----------------|
| 1-36 | 2 | 4 |
| 27-72 | 4 | 8 |
| 73-144 | 8 | 16 |
| 145-275 | 16 | 16 |

The size of the BWP may be represented by a quantity of included RBs. The configuration 1 and the configuration 2 indicate two RBG size configurations provided corresponding to sizes of the BWP. For example, when the BWP includes 1 to 36 RBs, the RBG may include two RBs (corresponding to the configuration 1), or may include four RBs (corresponding to the configuration 2). The rest may be deduced by analogy, and are not enumerated.

In this configuration type, the bitmap may correspond, from a most significant bit (most significant bit, MSB) to a least significant bit (least significant bit, LSB), to a plurality of RBGs (or subbands) whose index values are in ascending order. For example, "1" is used to identify that a corresponding RBG (or subband) is scheduled, and "0" indicates that a corresponding RBG (or subband) is not scheduled.

The other frequency domain resource configuration type is a type 1 (type 1) defined in the standard, and a scheduled frequency domain resource position is determined by using a start frequency domain position and a length of a contiguous frequency domain subband. This type may support contiguous frequency domain resource assignment. For example, in the type 1, frequency domain resources may be assigned based on different granularities. For example, the frequency domain resources are assigned by using an RB as a granularity, using K (K is a positive integer) RBs as a granularity, or using an RBG as a granularity. For example, the RB is used as a granularity. The network device may use a resource indication value (resource indication value, RIV) to indicate an index of a start RB for assigning a frequency domain resource and a contiguous bandwidth (for example, a quantity of RBs included in the contiguous bandwidth), and assign a group of consecutive RBs from an active BWP to a terminal device.

Currently, neither of the two frequency domain resource configuration types supports symbol-level frequency domain resource assignment. To be specific, in a plurality of scheduled symbols, frequency domain units for mapping data are the same. Therefore, PUSCH scheduling is not flexible enough. In some scenarios, for example, in a scenario in which an SRS resource and a PUSCH occupy a same time domain symbol in the following example, some idle resource fragments may not be scheduled, resulting in low resource utilization.

For ease of understanding, the following briefly describes an SRS and configuration information of an SRS resource.

The SRS may be used to measure an uplink channel, and may be used to measure a downlink channel based on channel reciprocity in a TDD system. Therefore, the SRS is an important signal in wireless communication. Currently, the SRS is usually transmitted through frequency hopping in frequency domain, and different time domain symbols may occupy different RBs in frequency domain.

For example, a network device may configure, by sending the configuration information of the SRS resource, a quantity of ports corresponding to the SRS resource and a corresponding time-frequency resource. A terminal device may send the SRS on the SRS resource configured by the network device. The configuration information of the SRS resource may include a frequency domain configuration parameter and a time domain configuration parameter. For an SRS resource of a port $pi$, a start position $k_0^{(p_i)}$ in frequency domain may satisfy: $k_0^{(p_i)} = \overline{k}_0^{(p_i)} + n_{offset}^{FH} + n_{offset}^{RPFS}$. $\overline{k}_0^{(p_i)}$ satisfies: $\overline{k}_0^{(p_i)} = n_{\text{shift}} N_{\text{sc}}^{\text{RB}} + \left( k_{\text{TC}}^{(pi)} + k_{\text{offset}}^{l'} \right) \bmod K_{\text{TC}}$. In the formula, $p_i$ represents a port number, and a value of $p_i$ is, for example, 1000, 1001, or 1002; $n_{\text{shift}} N_{\text{sc}}^{\text{RB}}$ represents a subcarrier shift of the frequency domain start position of the SRS resource; $n_{\text{shift}}$ represents a quantity of RBs that are configured by using higher layer signaling and that are shifted relative to a reference frequency domain position; $N_{SC}^{RB}$ represents a quantity of subcarriers included in one RB; $K_{\text{TC}}$ represents a comb (comb) degree, and is used to describe a frequency domain density of an SRS resource of one port mapped to a frequency domain subcarrier, and a value of $K_{\text{TC}}$ may be, for example, 2, 4, or 8; and $\left( k_{\text{TC}}^{(pi)} + k_{\text{offset}}^{l'} \right) \bmod K_{\text{TC}}$ represents a subcarrier shift of an RB in which the start frequency domain position of the SRS resource of the port $p_i$ is located with a 1st subcarrier of the RB as a reference. $k_{\text{TC}}^{(pi)}$ represents a comb shift of the SRS resource of the port $p_i$, $k_{\text{TC}}^{(pi)}$ may be configured by the network device or is related to a comb shift of a reference port configured by the network device, and a value of $k_{\text{TC}}^{(pi)}$ may be, for example, 0, 1, ..., or $K_{\text{TC}}$-1. $k_{\text{offset}}^{l'}$ represents a shift on time domain symbols with different combs. For example, if $k_{\text{offset}}^{l'}$ is 0, it indicates that a comb is not shifted on different time domain symbols. If $k_{\text{offset}}^{l'} > 0$, it indicates a shift of the comb on a next time domain symbol relative to a previous time domain symbol. $n_{offset}^{FH}$ satisfies: $n_{offset}^{FH} = \sum_{b=0}^{B_{SRS}} m_{SRS,b} N_{\text{sc}}^{\text{RB}} n_b$, indicating a frequency domain shift caused by SRS resource frequency hopping. $n_{offset}^{RPFS}$ represents a corresponding frequency domain shift when SRS partial sending (partial SRS) is configured. It can be learned that a subcarrier-level shift of the SRS resource in frequency domain may be defined by using $\overline{k}_0^{(p_i)}$, and an RB-level shift of the SRS resource in frequency domain may be defined by using $n_{offset}^{FH}$ and $n_{offset}^{RPFS}$. It should be understood that the RB-level shift may be understood as a quantity of RBs of the shift, or a quantity of subcarriers corresponding to an integer quantity of RBs.

For the foregoing parameters $b$, $B_{SRS}$, $m_{SRS,b}$, and $n_b$, refer to the following descriptions with reference to Table 2.

The network device may configure parameters $C_{SRS}$, $B_{SRS}$, and $b_{hop}$ by using higher layer signaling, to jointly configure a measurement bandwidth and a frequency hopping bandwidth of the SRS by using these parameters. Table 2 shows an SRS bandwidth configuration (SRS bandwidth configuration) table defined in the current standard.

Table 2

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |

(continued)

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| **18** | **72** | **1** | **24** | **3** | **12** | **2** | **4** | **3** |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |

(continued)

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

The following describes parameters in the SRS bandwidth configuration table. Using $C_{SRS}$=18 as an example, a corresponding row in the SRS bandwidth configuration table is shown in bold in Table 2. It can be learned that when values of $B_{SRS}$ are respectively 0, 1, 2, and 3, a total bandwidth of 72 RBs may be divided according to a tree structure. For bandwidth division statuses corresponding to different values of $B_{SRS}$, refer to FIG. 2.

When the value of $B_{SRS}$ is 0, a corresponding bandwidth is 72 RBs, and the 72 RBs are 72 consecutive RBs on a same time domain symbol. The 72 RBs may be referred to as a corresponding frequency hopping bandwidth when the value of $B_{SRS}$ is 0. When the value of $B_{SRS}$ configured for the terminal device is 0, the terminal device may send an SRS on 72 consecutive RBs on one time domain symbol. It should be understood that a smaller value of $B_{SRS}$ indicates a larger corresponding bandwidth. The corresponding bandwidth (that is, 72 RBs) when the value of $B_{SRS}$ is 0 is a corresponding maximum bandwidth when the index $C_{SRS}$=18.

When the value of $B_{SRS}$ is 1, a corresponding bandwidth is 24 RBs, and the 24 RBs are 24 consecutive RBs on a same time domain symbol. The 24 RBs may be referred to as a corresponding frequency hopping bandwidth when the value of $B_{SRS}$ is 1. When the value of $B_{SRS}$ configured for the terminal device is 1, it indicates that the terminal device may send an SRS on 24 consecutive RBs on one time domain symbol. The 24 RBs are 1/3 of a previous-level bandwidth (that is, the corresponding bandwidth when the value of $B_{SRS}$ is 0). In other words, the previous-level bandwidth is divided into three parts based on the frequency hopping bandwidth, that is, $N_1$=3. The maximum bandwidth is divided into three parts, that is, $N_0 \times N_1$=1×3=3. To complete SRS sending on 72 RBs, the terminal device needs to perform frequency hopping transmission at least three times.

When the value of $B_{SRS}$ is 2, a corresponding bandwidth is 12 RBs, and the 12 RBs are 12 consecutive RBs on a same time domain symbol. The 12 RBs may be referred to as a corresponding frequency hopping bandwidth when the value of $B_{SRS}$ is 2. When the value of $B_{SRS}$ configured for the terminal device is 2, it indicates that the terminal device may send an SRS on 12 consecutive RBs on one time domain symbol. The 12 RBs are 1/2 of a previous-level bandwidth (that is, the corresponding bandwidth when the value of $B_{SRS}$ is 1). In other words, the previous-level bandwidth is divided into two parts based on the frequency hopping bandwidth, that is, $N_2=2$. The maximum bandwidth is divided into six parts, that is, $N_0 \times N_1 \times N_2 = 1 \times 3 \times 2 = 6$. To complete SRS sending on 72 RBs, the terminal device needs to perform frequency hopping transmission at least six times.

When the value of $B_{SRS}$ is 3, a corresponding bandwidth is four RBs, and the four RBs are four consecutive RBs on a same time domain symbol. The four RBs may be referred to as a corresponding frequency hopping bandwidth when the value of $B_{SRS}$ is 3. When the value of $B_{SRS}$ configured for the terminal device is 3, it indicates that the terminal device may send an SRS on four consecutive RBs on one time domain symbol. The four RBs are 1/3 of a previous-level bandwidth (that is, the corresponding bandwidth when the value of $B_{SRS}$ is 2). In other words, the previous-level bandwidth is divided into three parts based on the frequency hopping bandwidth, that is, $N_3=3$. The maximum bandwidth is divided into 18 parts, that is, $N_0 \times N_1 \times N_2 \times N_3 = 1 \times 3 \times 2 \times 3 = 18$. To complete SRS sending on 72 RBs, frequency hopping transmission needs to be performed at least 18 times.

A quantity of pieces of dividing the maximum bandwidth may be calculated by using the following formula:

$\prod_{b'=b_{hop}}^{B_{SRS}} N_{b'}$ , that is, a value of b' is taken from 0 until a product of $N_{b'}$ corresponding to $B_{SRS}$ is obtained.

It can be learned from the figure that, when the index $C_{SRS}=18$, as the value of $B_{SRS}$ decreases, the frequency hopping bandwidth becomes smaller, the 72 RBs are divided into more pieces, and a tree-like structure is presented. It is not difficult to learn that, when the index $C_{SRS}$ in Table 2 is another value, such a rule also exists. Details are not described.

In the SRS bandwidth configuration table, a value of the parameter $B_{SRS}$ may indicate the SRS frequency hopping bandwidth. The parameter $b_{hop}$ may indicate a full bandwidth of the SRS resource, and a value range of $b_{hop}$ is the same as a value range of $B_{SRS}$ in Table 2, that is, may be 0, 1, 2, or 3. The full bandwidth of the SRS resource may also be referred to as an SRS measurement bandwidth, or a total bandwidth for SRS measurement. The full bandwidth of the SRS resource indicates a total bandwidth for SRS measurement that can be completed through a plurality of times of SRS frequency hopping.

If a value of $b_{hop}$ is greater than or equal to the value of $B_{SRS}$, it means that a total bandwidth of the SRS resource may be traversed through one time of frequency hopping transmission, that is, frequency hopping transmission does not need to be performed, a bandwidth of each time of SRS transmission is a bandwidth corresponding to the value of $B_{SRS}$, and the frequency domain start shift parameter $n_b$ of the SRS satisfies $n_b = \lfloor n_{RRC} / m_{SRS,b} \rfloor \mod N_B$ .

If a value of $b_{hop}$ is less than the value of $B_{SRS}$, it means that a total bandwidth of the SRS resource cannot be traversed through one time of frequency hopping transmission, that is, frequency hopping transmission needs to be performed, a bandwidth of each time of SRS transmission is a bandwidth corresponding to the value of $B_{SRS}$, and the frequency domain start shift parameter $n_b$ of the SRS satisfies:

$$n_b = \begin{cases} \lfloor 4n_{RRC} / m_{SRS,b} \rfloor \mod N_b, & b \le b_{hop} \\ \left( F_b(n_{SRS}) \right) + \lfloor 4n_{RRC} / m_{SRS,b} \rfloor \mod N_b, & b > b_{hop} \end{cases} .$$

$n_{RRC}$ in the formula is a higher layer parameter, and is used to determine a start position of SRS frequency hopping transmission, and $F_b(n_{SRS})$ satisfies:

$$F_b(n_{SRS}) = \begin{cases} (N_b / 2) \left\lfloor \dfrac{n_{SRS} \mod \prod_{b'=b_{hop}}^{b} N_{b'}}{\prod_{b'=b_{hop}}^{b-1} N_{b'}} \right\rfloor + \left\lfloor \dfrac{n_{SRS} \mod \prod_{b'=b_{hop}}^{b} N_{b'}}{2\prod_{b'=b_{hop}}^{b-1} N_{b'}} \right\rfloor & \text{if } N_b \text{ even} \\ \lfloor N_b / 2 \rfloor \left\lfloor n_{SRS} / \prod_{b'=b_{hop}}^{b-1} N_{b'} \right\rfloor & \text{if } N_b \text{ odd} \end{cases} .$$

That is, when a value of $N_b$ is an odd number (if $N_b$ odd), $F_b(n) = \lfloor N_b / 2 \rfloor \left\lfloor n / \prod_{b'=b_{hop}}^{b-1} N_{b'} \right\rfloor$ ; or when a value of $N_b$ is an even number (if $N_b$ even), $F_b(n) = (N_b / 2) \left\lfloor \dfrac{n \mod \prod_{b'=b_{hop}}^{b} N_{b'}}{\prod_{b'=b_{hop}}^{b-1} N_{b'}} \right\rfloor + \left\lfloor \dfrac{n \mod \prod_{b'=b_{hop}}^{b} N_{b'}}{2\prod_{b'=b_{hop}}^{b-1} N_{b'}} \right\rfloor$ .

In other words, the value of $b_{hop}$ may be used to enable or disable SRS frequency hopping transmission. For example, in the foregoing example with reference to $C_{SRS}=18$ in Table 2, if $B_{SRS}=2$ and $b_{hop}=0$ are configured, the value of $b_{hop}$ is less than the value of $B_{SRS}$, indicating that SRS frequency hopping transmission is enabled, an SRS frequency hopping bandwidth is 12 RBs, an SRS measurement bandwidth is $m_{SRS,0}=72$ RBs, and a total of six times of frequency hopping are required to complete scanning of the entire SRS measurement bandwidth. The six times may be obtained through calculation according to a formula $\prod_{b'=b_{hop}}^{B_{SRS}} N_{b'}$. In this case, the value of $B_{SRS}$ is 2, that is,

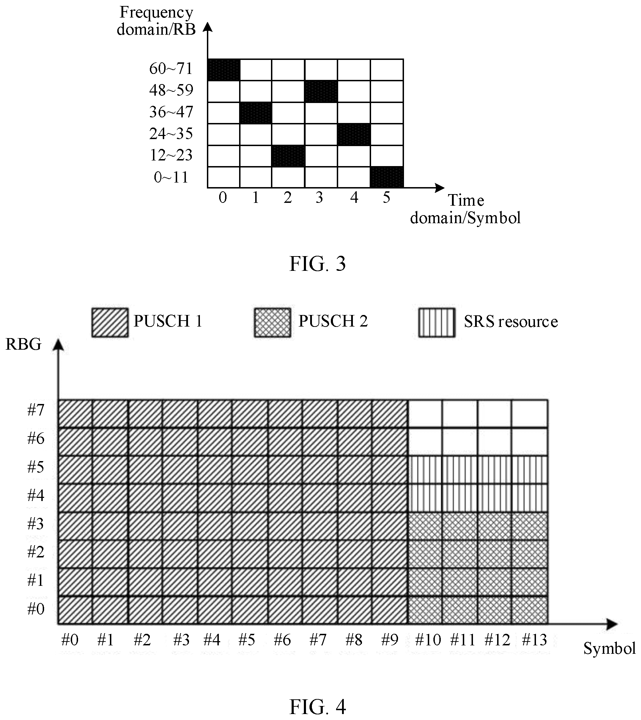

$$\prod_{b'=b_{hop}}^{2} N_{b'} = N_0 \times N_1 \times N_2 = 1 \times 3 \times 2 = 6$$ . When the parameter $n_{RRC}=0$ is configured, a frequency domain position occupied by SRS frequency hopping transmission may be obtained based on the foregoing start position formula of the frequency hopping frequency domain position, as shown in FIG. 3.

Because both the SRS and uplink data are sent in an uplink slot (slot), there may be a case in which a PUSCH and the SRS resource are sent in a same slot or on a same time domain symbol. To avoid interference caused by a collision between the SRS and the uplink data, the SRS resource is usually properly avoided during PUSCH scheduling. However, when a frequency domain resource is assigned based on a currently existing frequency domain resource configuration type, a resource on a time domain symbol in which the SRS resource is located may not be fully utilized. This causes a resource waste to some extent, and resource utilization needs to be improved.

The following provides descriptions with reference to the accompanying drawings.

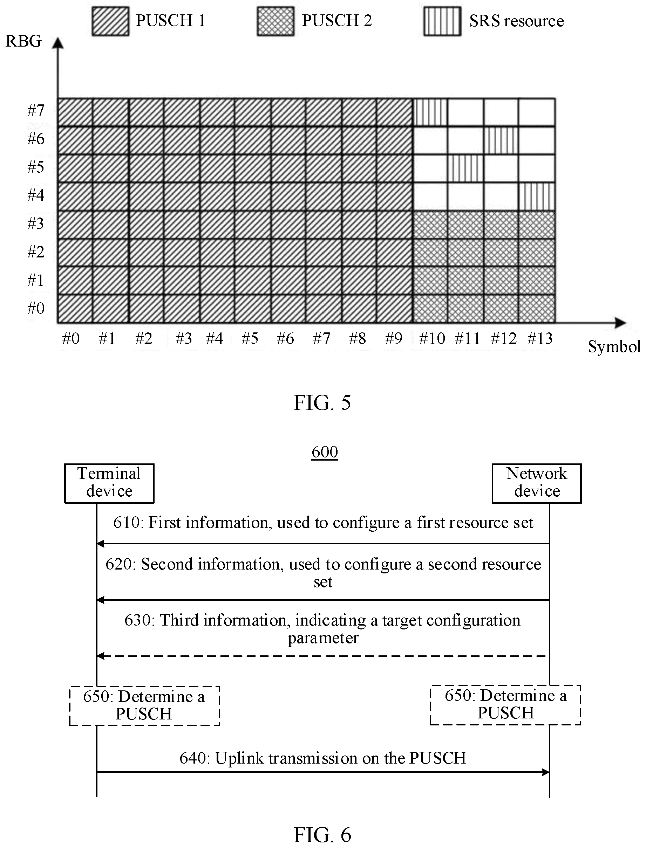

FIG. 4 and FIG. 5 each show an SRS resource and PUSCHs scheduled based on different frequency domain resource configuration types. It can be learned that, in FIG. 4 and FIG. 5, a time domain resource is scheduled by using a time domain symbol as a granularity, and a frequency domain resource is scheduled by using an RBG as a granularity. One RBG may be, for example, four RBs.

In FIG. 4, a network device schedules, as a PUSCH 1, frequency domain resources of eight RBGs: an RBG #0 to an RBG #7, on 10 time domain symbols: a symbol #0 to a symbol #9, and schedules, as an SRS resource, frequency domain resources of two RBGs: an RBG #4 and an RBG #5, on four time domain symbols: a symbol #10 to a symbol #13. On the four time domain symbols: the symbol #10 to the symbol #13, to avoid the SRS resource, if the network device uses the frequency domain resource configuration type 1, consecutive frequency domain resources may be scheduled on a side of the RBG #4 and the RBG #5. For example, as shown in the figure, the network device schedules, as a PUSCH 2, resources of four RBGs: the RBG #0 to the RBG #3, on the time domain symbols #10 to #13. However, resources whose RBG indexes are greater than 5, such as resources of the RBG #6 and the RBG #7 in the figure, cannot be scheduled. As a result, these resources are idle.

In FIG. 5, a network device schedules, as a PUSCH 1, frequency domain resources of eight RBGs: an RBG #0 to an RBG #7, on 10 time domain symbols: a symbol #0 to a symbol #9, and schedules an SRS resource on four time domain symbols: a symbol #10 to a symbol #13, and the SRS resource is configured with frequency hopping transmission. As shown in the figure, the SRS resource occupies different frequency domain resources on the four time domain symbols: the symbol #10 to the symbol #13. The RBG #7 is occupied on the symbol #10, the RBG #5 is occupied on the symbol #11, the RBG #6 is occupied on the symbol #12, and the RBG #4 is occupied on the symbol #13. To avoid the SRS resource, if the network device uses the frequency domain resource configuration type 0, the network device may schedule, as a PUSCH 2, resources of four RBGs: the RBG #0 to the RBG #3, on the four time domain symbols: the symbol #10 to the symbol #13. For a resource whose RBG index is greater than 3, because the SRS resource has different occupation statuses on the time domain symbols, idle frequency domain resources on the time domain symbols are different from each other. If the network device needs to schedule these idle frequency domain resources as the PUSCH 2, scheduling needs to be performed for each time domain symbol. However, the current frequency domain resource configuration type 0 does not support symbol-level frequency domain resource position indication. Therefore, the idle frequency domain resource still cannot be used.

In conclusion, it can be learned that, regardless of which frequency domain resource configuration type is used, an idle resource on a time domain symbol occupied by an SRS resource cannot be fully used, PUSCH scheduling is not flexible enough, and resource utilization needs to be improved.

In view of this, this application provides a method. A network device divides a PUSCH into two parts of resources (that is, a first resource and a second resource) for scheduling. The first resource is a resource from a first resource set configured in advance by using first information other than a second resource set, and the second resource is from the second resource set configured by using second information. Because the first resource set and the second resource set may be respectively configured by using the first information and the second information, resource occupation statuses of the first resource set and the second resource set may be different, and the network device may configure resources for the first resource set and the second resource set by using different granularities. In this way, more flexible resource configuration can be implemented. In some scenarios, for example, when a same time domain symbol as that of the SRS resource is occupied, even if some idle resource fragments may exist, resource configuration may be performed by using the method. For example, resources in the second resource set may be configured based on a configuration parameter of the SRS resource. Because an SRS is usually transmitted through frequency hopping, the SRS resource does not necessarily occupy an entire measurement bandwidth in frequency domain. Therefore, when the resources in the second resource set are configured based on the configuration parameter of the SRS resource, there is a possibility that the resource is different from an actually configured SRS resource, that is, a resource fragment similar to that in FIG. 4 or FIG. 5 may be fully utilized, thereby helping improve resource utilization.

The method provided in this application is described below with reference to the accompanying drawings.

FIG. 6 is a schematic flowchart of a communication method according to an embodiment of this application. The method shown in FIG. 6 shows a procedure in which a network device configures a PUSCH for a terminal device from a perspective of device interaction. However, this should not constitute any limitation on an execution body of the method provided in this application. For example, the terminal device may be replaced with a component (for example, a chip, a chip system, or a processor) in the terminal device, or may be replaced with a logical module or software that can implement all or some functions of the terminal device. The network device may be replaced with a component (for example, a chip, a chip system, or a processor) in the network device, or may be replaced with a logical module or software that can implement all or some functions of the network device.

As shown in FIG. 6, the method 600 includes step 610 to step 650. The following describes the steps in the method 600 in detail.

In step 610, the network device sends first information, where the first information is used to configure a first resource set. Correspondingly, the terminal device receives the first information.

The first resource set may occupy at least one time domain symbol in time domain. For ease of differentiation and description, the time domain symbol occupied by the first resource set is denoted as a first time domain symbol, and there may be one or more first time domain symbols. The first information may be used to configure a frequency domain resource on the at least one first time domain symbol. For example, a resource in the first resource set in frequency domain may be configured by the network device for the terminal device based on an existing frequency domain resource configuration type (for example, the foregoing type 0 or type 1), and a resource in the first resource set in time domain may also be configured by the network device for the terminal device based on an existing time domain resource configuration type. The first information may be, for example, information carried in DCI.

For example, if the network device configures the first resource set by using the frequency domain resource configuration type 1, the first information may specifically include a frequency domain start position and a contiguous frequency domain bandwidth of the first resource set. The frequency domain start position may be specifically indicated by using a shift relative to a predefined frequency domain reference position. The contiguous frequency domain bandwidth may be specifically indicated by using a quantity of frequency domain units (such as subbands, RBGs, or RBs) included in the contiguous frequency domain bandwidth.

For another example, if the network device configures the second resource set by using the frequency domain resource configuration type 0, the first information may be specifically a bitmap including a plurality of bits, to indicate, by using different bits, whether frequency domain units corresponding to the bits are configured as resources in the first resource set. For example, each bit may correspond to one RBG, and the first information may indicate, by using different bits, whether RBGs corresponding to the bits are configured as resources in the first resource set.

For another example, when scheduling the terminal device, the network device may further indicate/notify a time domain resource position corresponding to data scheduling to the terminal device, that is, a time domain symbol corresponding to the first resource set. The network device may indicate, by using indication information, a time domain unit corresponding to the first resource set. For example, the indication information may specifically indicate a start time domain symbol corresponding to the first resource set and a corresponding time domain symbol length. The network device may configure one or more optional time domain resource parameters by using a PUSCH time domain allocation list (pusch-TimeDomainAllocationList) field in higher layer signaling (for example, PUSCH configuration (PUSCH-Config)). Optionally, the time domain resource parameter includes a parameter k0, and the parameter k0 may indicate a time domain shift, for example, a slot (slot) shift, between DCI and a physical downlink shared channel (physical downlink shared channel, PDSCH)/PUSCH scheduled by using the DCI. If the field does not exist, the terminal device may consider a shift as 0 by default. The time domain resource parameter further includes a parameter "startSymbolAndLength", which indicates a start symbol and a length, and is also referred to as a start position and length indicator (start and length indicator, SLIV).

It should be understood that the foregoing configuration method, that is, related signaling, for the first resource set is merely an example. A method and signaling for configuring the first resource set by the network device are not limited in this application.

In step 620, the network device sends second information, where the second information is used to configure the second resource set. Correspondingly, the terminal device receives the second information.

The second resource set also occupies at least one time domain symbol in time domain. For ease of differentiation and description, the time domain symbol occupied by the second resource set is denoted as a second time domain symbol, and there may be one or more second time domain symbols. The second information may be used to configure a frequency domain resource on the at least one second time domain symbol.

In a possible case, the second resource set overlaps the first resource set. In other words, some time domain symbols in the at least one first time domain symbol are the same as the at least one second time domain symbol, or there is an intersection set between the at least one first time domain symbol and the at least one second time domain symbol.

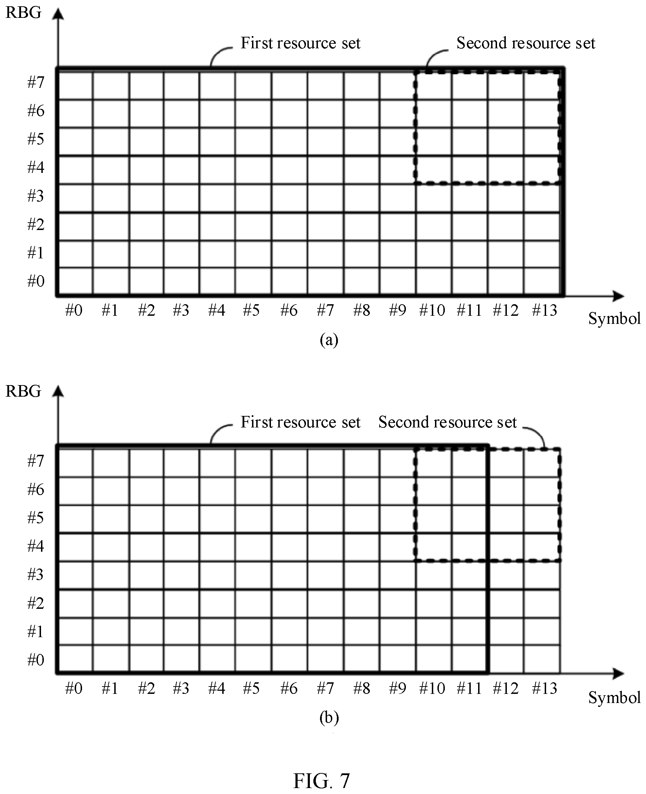

(a) and (b) in FIG. 7 show two examples in which the first resource set and the second resource set have a resource overlap. For ease of differentiation, a range of the first resource set is marked by a black solid-line box in the figure, and a range of the second resource set is marked by a black dashed-line box in the figure.

In (a) in FIG. 7, resources in the first resource set span from a symbol #0 to a symbol #13 in time domain and from an RGB #0 to an RGB #7 in frequency domain, and resources in the second resource set span from a symbol #10 to the symbol #13 in time domain and from an RGB #4 to the RGB #7 in frequency domain. That is, the second resource set falls within the range of the first resource set, and overlapping resources between the first resource set and the second resource set are the second resource set. In other words, the at least one first time domain symbol includes the at least one second time domain symbol. In this case, a quantity of first time domain symbols is greater than a quantity of second time domain symbols. In other words, the first resource set occupies a plurality of time domain symbols in time domain.

In (b) in FIG. 7, resources in the first resource set span from a symbol #0 to a symbol #11 in time domain and from an RGB #0 to an RGB #7 in frequency domain, and resources in the second resource set span from a symbol #10 to a symbol #13 in time domain and from an RGB #4 to the RGB #7 in frequency domain. That is, the second resource set overlaps the first resource set, but does not completely fall within the range of the first resource set, and overlapping resources between the first resource set and the second resource set are some resources in the second resource set. In this case, there may be a plurality of first time domain symbols, there may also be a plurality of second time domain symbols, and at least one second time domain symbol is the same as at least one first time domain symbol.

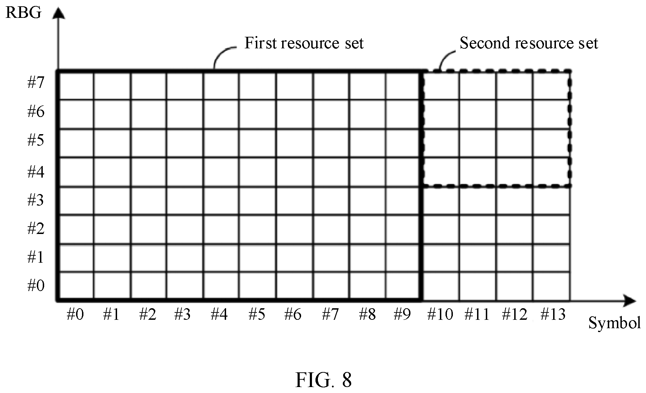

In another possible case, the second resource set and the first resource set do not overlap. In other words, any one of the at least one first time domain symbol is different from any one of the at least one second time domain symbol, or there is no intersection set between the at least one first time domain symbol and the at least one second time domain symbol. FIG. 8 shows an example in which the first resource set and the second resource set do not overlap. A range of the first resource set is marked by a black solid-line box in the figure, and a range of the second resource set is marked by a black dashed-line box in the figure. It can be learned that resources in the first resource set span from a symbol #0 to a symbol #9 in time domain and from an RGB #0 to an RGB #7 in frequency domain, and resources in the second resource set span from a symbol #10 to a symbol #13 in time domain and from an RGB #4 to the RGB #7 in frequency domain. In other words, the first resource set and the second resource set are adjacent but do not overlap. In this case, there may be one or more first time domain symbols and one or more second time domain symbols. This is not limited.

In this embodiment of this application, the second resource set may be configured by the network device by using the second information. The second information and the first information may be carried in different signaling. For example, the second information may be carried in higher layer signaling, for example, an RRC message. In other words, the network device may configure the resources in the second resource set by using higher layer signaling, or the network device may preconfigure the resources in the second resource set by using higher layer signaling. After an SRS resource is scheduled for each terminal device, the terminal device may be further indicated, based on a distribution status of the SRS resource, to select a specific resource in the second resource set as a second resource.

As described above, the PUSCH includes the first resource and the second resource. The network device indicates the terminal device to select a specific resource in the second resource set as the second resource, that is, as the PUSCH. In other words, at least some resources in the second resource set may be used as the PUSCH, or the second resource set includes a resource that can be used as the PUSCH. Being used as the PUSCH may be understood as that the time-frequency resource may be used as the PUSCH to carry uplink data, or the time-frequency resource may be used to send uplink data on the PUSCH.

In a possible design, the second resource set includes one or more groups of resources, and each group of resources may be configured by using one group of configuration parameters. Correspondingly, the second information includes one or more groups of configuration parameters used to configure the one or more groups of resources. The second resource may be from one group of resources in the second resource set, which is denoted as a target resource for ease of differentiation and description. In other words, the second resource is from the target resource, or the second resource is a resource in the target resource. The target resource is one group of resources in the one or more groups of resources, and is configured by using one group of configuration parameters. For ease of differentiation and description, one group of configuration parameters used to configure the target resource is denoted as target configuration parameters.

For example, each group of configuration parameters indicates one or more of the following: a frequency domain shift, an index in a preset table, a parameter $b_{hop}$, a time domain start position, a quantity of time domain symbols, or a repetition factor R. For a group of configuration parameters, the time domain start position and the quantity of time domain symbols are used to determine a time domain position and a size of a group of resources determined by using the group of configuration parameters, and the frequency domain shift, the index in the preset table, the parameter $b_{hop}$, and the repetition factor R may be used to determine a frequency domain distribution status of the group of resources on each time domain symbol.

The following describes the configuration parameters in detail.

Frequency domain shift: For a group of configuration parameters, the frequency domain shift is a quantity of frequency domain units by which a frequency domain start position of a group of resources configured by using the group of configuration parameters is shifted relative to a reference frequency domain position. In an example in which an RB is used as a frequency domain unit, the frequency domain shift may be specifically a quantity of RBs by which a frequency domain start RB of a group of resources configured by using the group of configuration parameters is shifted relative to a reference frequency domain position. The reference frequency domain position may be, for example, a frequency domain start position of the second resource set, for example, a 1st RB in the RBG #4 in FIG. 7 or FIG. 8, or the reference frequency domain position may be, for example, a frequency domain start position of a scheduled PUSCH, for example, a 1st RB in the RBG #0 in FIG. 7 or FIG. 8. Alternatively, the reference frequency domain position may be a predefined frequency domain position, for example, a common frequency domain position 0, an RB position or a frequency domain subband position corresponding to a predefined index, or a start position of a predefined reference signal. This is not limited in this application.

Time domain start position: For a group of configuration parameters, the time domain start position may be used to determine a start position, for example, a start time domain symbol, of a group of resources determined by using the group of configuration parameters in time domain. The time domain start position may be indicated by using an index of the start time domain symbol. The index of the start time domain symbol may be determined based on a shift of the start time domain symbol relative to a reference time domain position. The reference time domain position may be, for example, a start time domain symbol of a slot, or a start time domain symbol of the second resource set, or a predefined time domain position such as a common time domain position 0, or a time domain symbol position or a slot position corresponding to a predefined index, or a start position of a predefined reference signal. This is not limited in this application.

Quantity of time domain symbols: For a group of configuration parameters, the quantity of time domain symbols is used to determine duration of a group of resources determined by using the group of configuration parameters in time domain. In other words, a time domain position and a size of the group of resources may be determined by using a time domain start position and the quantity of time domain symbols.

Repetition factor R: R is a quantity of consecutive time domain symbols. The repetition factor R indicates that uplink transmission is performed on R consecutive time domain symbols by occupying a same frequency domain resource.

Index in the preset table: may be used to define at least one group of values of the parameter $m_b$ and/or values of the parameter $N_b$. When a plurality of groups of values of the parameter $m_b$ and/or values of the parameter $N_b$ are defined in the preset table, each group of values of the parameter $m_b$ and/or values of the parameter $N_b$ may correspond to one index. Therefore, it may also be expressed as that a value of the parameter $m_b$ and/or a value of the parameter $N_b$ corresponding to each of at least one index value are/is defined in the preset table. For a group of configuration parameters, the value of the parameter $m_b$ may indicate a quantity of frequency domain units included in a contiguous bandwidth occupied on one time domain symbol by a group of resources configured by using the group of configuration parameters, or a quantity of consecutive frequency domain units occupied on one time domain symbol by a group of resources configured by using the group of configuration parameters. Because a bandwidth size may be represented by a quantity of frequency domain units, it may also be expressed as that the value of the parameter $m_b$ may indicate a size of a contiguous bandwidth occupied on one time domain symbol by a group of resources configured by using the group of configuration parameters. The value of the parameter $N_b$ may indicate a ratio of a quantity of frequency domain units included in a previous-level bandwidth corresponding to the parameter $m_b$ in the preset table to the quantity of frequency domain units included in the contiguous bandwidth corresponding to the value of the parameter $m_b$. In an example in which an RB is used as a frequency domain unit, the value of the parameter $m_b$ may indicate a quantity of RBs included in a contiguous bandwidth occupied on one time domain symbol by a group of resources configured by using the group of configuration parameters, and the value of the parameter $N_b$ may indicate a quantity of RBs included in a previous-level bandwidth corresponding to the parameter $m_p$ in the preset table and the quantity of RBs included in the contiguous bandwidth corresponding to the value of the parameter $m_b$. Because a bandwidth size may be represented by a quantity of frequency domain units, it may also be expressed as that the parameter $N_b$ may indicate a ratio of a previous-level bandwidth corresponding to the parameter $m_b$ in the preset table to a contiguous bandwidth corresponding to the parameter $m_b$.

Optionally, the preset table includes one or more corresponding rows when C is one or more index values in 0 to 63 in the following Table 3. In other words, the preset table may be Table 3, or may be a new table including some rows in Table 3. This is not limited in this application.

Table 3

| C | B = 0 | | B = 1 | | B = 2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 0 | 4 | 1 | 4 | 1 | 4 | 1 | 4 | 1 |

(continued)

| C | B = 0 | | B = 1 | | B = 2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |

(continued)

| C | B = 0 | | B = 1 | | B = 2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

The row with the index value 0 in Table 3 is used as an example. The index value 0 corresponds to one group of values of the parameter $m_b$ and values of the parameter $N_b$, which are as follows: $m_b$ is 4, and $N_b$ is 1. The row with the index value 1 in Table 3 is used as an example. The index value 1 corresponds to three groups of values of the parameter $m_b$ and values of the parameter $N_b$, which are respectively as follows: $m_b$ is 8, and $N_b$ is *1*; $m_b$ is 4, and $N_b$ is 2; and $m_b$ is 4, and $N_b$ is 1. The row with the index value 4 in Table 3 is used as an example. The index value 4 corresponds to four groups of values of the parameter $m_b$ and values of the parameter $N_b$, which are respectively as follows: $m_b$ is 16, and $N_b$ is 1; $m_b$ is 8, and $N_b$ is 2; $m_b$ is 4, and $N_b$ is 2; and $m_b$ is 4, and $N_b$ is 1. The rest may be deduced by analogy, and are not enumerated. A value of $B$ in the table may be 0, 1, 2, or 3, that is, $0 \leq B < 4$, and 4 is an example of $B_{max}$.

Compared with those in Table 2, it can be found that functions of parameters $C$, $B$, $m_b$, and $N_b$ in Table 3 are similar to functions of $C_{SRS}$, $B_{SRS}$, $m_{SRS,b}$, and $N_b$ in Table 2. Actually, Table 3 exactly reuses the foregoing SRS resource configuration manner, and some parameters in the SRS bandwidth configuration table are slightly adjusted, to form the table shown in Table 3. For example, $m_{SRS,b}$ is replaced with $m_b$, and a frequency hopping bandwidth of an SRS indicated by $m_{SRS,b}$ is replaced with a contiguous bandwidth occupied by one group of resources on a same time domain symbol.

Because each group of resources in the second resource set is configured by using one group of configuration parameters, and the second resource is from one group of resources (namely, the target resource) in the second resource set, the contiguous bandwidth occupied by one group of resources on the same time domain symbol is a contiguous bandwidth occupied by the PUSCH on the same time domain symbol, that is, a contiguous bandwidth used by the terminal device during uplink transmission. In this specification, for ease of description, the contiguous bandwidth that is occupied on one time domain symbol and that is indicated by the parameter $m_b$ may be denoted as a frequency hopping bandwidth of the PUSCH.

It should be noted that the frequency hopping bandwidth of the PUSCH described in this specification is a bandwidth for frequency hopping in the second resource set determined based on the method provided in this application. PUSCH frequency hopping transmission is frequency hopping transmission performed by using the frequency hopping bandwidth of the PUSCH as a frequency domain granularity, and transmission performed on one frequency hopping bandwidth is referred to as one time of frequency hopping transmission.

In addition, the PUSCH includes the first resource and the second resource, and the second resource is from the second resource set. The PUSCH frequency hopping transmission is described only for some resources (that is, the second resource) of the PUSCH that fall within the range of the second resource set, but not for all resources of the PUSCH. With reference to the first resource, it can be learned that the PUSCH may be continuously or discontinuously transmitted in a partial area (that is, within the range of the first resource set), and transmitted in another partial area (for example, within the range of the second resource set) through frequency hopping.

Table 3 is used as an example of the preset table. The index in the preset table may be C in Table 3, and the previous-level bandwidth corresponding to the value of the parameter $m_b$ in the preset table is specifically a quantity of frequency domain units corresponding to a value of a parameter $m_{b-1}$ in parameters corresponding to a same index value. With reference to the foregoing descriptions of Table 2 and the tree structure, $B_{max}$ may be considered as a maximum quantity of levels in the tree structure. For example, Table 3 shows an example in which a maximum quantity of levels is 4. The value of the parameter $N_b$ is a quantity of frequency domain units corresponding to a value of the parameter $m_{b-1}$ and a quantity of frequency domain units corresponding to the value of the parameter $m_b$. In other words, when frequency hopping transmission is performed based on a bandwidth corresponding to the value of the parameter $m_b$ being a frequency hopping bandwidth, $N_b$ times of frequency hopping transmission need to be performed, and a bandwidth corresponding to the value of the parameter $m_{b-1}$ can be traversed.

Optionally, the preset table includes one or more groups of values of the parameter $m_b$ and/or values of the parameter $N_b$ in the following Table 4.

Table 4

| C | B = 0 | | B = 1 | |
|---|---|---|---|---|
| | $m_0$ | $N_0$ | $m_1$ | $N_1$ |
| 0 | $\left\lfloor \dfrac{X}{W} \right\rfloor \cdot W$ | 1 | W | $\left\lfloor \dfrac{X}{W} \right\rfloor$ |

Table 4 is an example of a user-defined table, that is, an example of the preset table. It can be learned that Table 4 is simpler than Table 3. As shown in Table 4, a value of $B$ is 0 or 1, that is, a value range of $B$ satisfies $0 \leq B < 2$, and 2 is another example of $B_{max}$. A value of the index C in the preset table is 0, and corresponds to two groups of values of the parameter $m_b$ and values of the parameter $N_b$, which are respectively as follows: a value of $m_0$ is $\left\lfloor \dfrac{X}{W} \right\rfloor \cdot W$, and a value of $N_0$ is 1; and a value of $m_0$ is $W$, and a value of $N_1$ is $\left\lfloor \dfrac{X}{W} \right\rfloor$.

$X$ represents a quantity of frequency domain units included in a bandwidth of the target resource, $W$ represents a quantity of frequency domain units included in a predefined contiguous bandwidth, that is, a quantity of frequency domain units included in a predefined frequency hopping bandwidth, $W$ is less than or equal to $X$, both $W$ and $X$ are positive integers, and $\lfloor \rfloor$ represents rounding down. In another design, $\left\lfloor \dfrac{X}{W} \right\rfloor$ in Table 4 may also be replaced with $\left\lceil \dfrac{X}{W} \right\rceil$, and $\lceil \rceil$ represents rounding up.

It may be understood that, when $W$ is equal to $X$, two groups of values of the parameter $m_b$ and values of the parameter $N_b$ corresponding to the index value 0 are consistent. In this case, it may also be expressed as that the index value corresponds to one group of values of the parameter $m_b$ and values of the parameter $N_b$.

It should be further understood that, if the value of $m_0$ is $\left\lfloor \dfrac{X}{W} \right\rfloor \cdot W$, that is, the frequency hopping bandwidth is

$$\left\lfloor \frac{X}{W} \right\rfloor \cdot W$$ , it means that the bandwidth of the target resource can be traversed in frequency domain if transmission is performed only once. Therefore, a quantity of frequency hopping times is 1. If the value of $m_0$ is $\left\lfloor \frac{X}{W} \right\rfloor \cdot W$ , that is, the frequency hopping bandwidth is $W$, it means that the bandwidth of the target resource cannot be traversed in frequency domain if transmission is performed once. Therefore, a quantity of frequency hopping times is $\left\lfloor \frac{X}{W} \right\rfloor$ .

In an example, assuming that $X$ is 16 and $W$ is 4, the following two groups of relationships may be obtained according to Table 4:
$B$ is 0, the value of $m_0$ is 16, and the value of $N_0$ is 1. In other words, the bandwidth of the target resource can be traversed in frequency domain through one time of transmission.

$B$ is 1, the value of $m_1$ is 4, and the value of $N_1$ is 4. In other words, the bandwidth of the target resource can be traversed in frequency domain through four times of frequency hopping transmission.

Table 4 is similar to defining two patterns. One pattern does not need frequency hopping transmission, and corresponds to a case in which $B$ is 0, and the other pattern needs frequency hopping transmission, and corresponds to a case in which $B$ is 1. The network device may directly indicate which pattern in the two patterns is to be used to determine the second resource, and does not need to additionally indicate the frequency hopping bandwidth of the PUSCH and the start position of the second resource, thereby reducing signaling overheads.

In the user-defined table shown in Table 4, the previous-level bandwidth corresponding to the parameter $m_b$ in the preset table is specifically a bandwidth corresponding to the parameter $m_{b-1}$ corresponding to a same index value. For example, a previous-level bandwidth corresponding to $m_1$ in the preset table is specifically a bandwidth corresponding to the value of $m_0$ in Table 4.

The second resource set may include a plurality of groups of resources, and the plurality of groups of resources may occupy a same bandwidth or different bandwidths in frequency domain. Therefore, corresponding $X$ may be configured for different groups of resources, to configure different bandwidths for the different groups of resources. For example, the parameter $X$ may be included in each group of configuration parameters. In other words, each group of configuration parameters may further include the parameter $X$. Alternatively, one $X$ may be configured for the plurality of groups of resources, to configure a same bandwidth for the plurality of groups of resources. For example, the parameter $X$ may be included in each group of configuration parameters described above, or may not be included in each group of configuration parameters, but is configured independently of each group of configuration parameters. This is not limited in this application.

It should be understood that Table 4 is merely an example of the user-defined table. Based on a same concept, a person skilled in the art may make simple transformations on this. For example, values of $m_b$ and/or values of $N_b$ corresponding to different indexes are slightly adjusted. For another example, more patterns are defined. For another example, a simple variation is made on Table 4, and each value of the index corresponds to one row. These simple transformations or variations shall fall within the protection scope of this application.

It should be further understood that the foregoing example tables with reference to Table 3 and Table 4 are merely two examples of the preset table, and should not constitute any limitation on this application. A person skilled in the art may also make simple transformations to these tables based on a same concept. For example, a value of either the parameter $m_b$ or the parameter $N_b$ is defined, and values of the two parameters are not defined together. For another example, the value of the parameter $m_b$ is represented by using a bandwidth size instead of a quantity of included frequency domain units. For another example, the value of the parameter $N_b$ is defined as a quantity of frequency hopping transmission times required for traversing a total bandwidth of the second resource set. These simple transformations shall fall within the protection scope of this application.

Parameter $b_{hop}$: For a group of configuration parameters, the parameter $b_{hop}$ may indicate a bandwidth of a group of resources configured by using the group of configuration parameters. That is, when a value of $b_{hop}$ is less than the value of $B$, a total bandwidth of the second resource set is greater than the frequency hopping bandwidth of the PUSCH, and PUSCH frequency hopping transmission is enabled; or when a full bandwidth of the second resource set is equal to the frequency hopping bandwidth of the PUSCH, PUSCH frequency hopping transmission is disabled. In other words, the parameter $b_{hop}$ may be used to determine whether the PUSCH is transmitted through frequency hopping.

The network device may include the one or more groups of configuration parameters in higher layer signaling. In other words, the second information may be carried in higher layer signaling. For example, the higher layer signaling may be an RRC message. This is not limited in this application.

For example, the following shows a possible representation form of one group of configuration parameters in the standard. The configuration parameter may be, for example, in an information element "frequency domain resource assignment (frequency domain resource assignment, FDRA)-rate matching (rate matching)". An example is as follows:

```
FDRA-rateMatching ::=                        SEQUENCE {
    resourceMapping                             SEQUENCE {
        startPosition                              INTEGER (0..5),
        nrofSymbols                                ENUMERATED {n1, n2, n4},
        repetitionFactor                           ENUMERATED {n1, n2, n4}
    },
    freqDomainShift                          INTEGER (0..268),
    freqHopping                              SEQUENCE {
        c                                          INTEGER (0..63),
        b-hop                                       INTEGER (0..3)
    },
```

"SEQUENCE" indicates that a data type is sequence. In this example, "FDRA-rateMatching" can be configured by using the following parameters: "resourceMapping" and "freqHopping". "resourceMapping" represents resource mapping, and may be configured by using the following parameters: a start position (startPosition) (which may correspond to the foregoing time domain start position), a quantity of symbols (nrofSymbols) (which may correspond to the foregoing quantity of time domain symbols), a repetition factor (repetitionFactor) (which may correspond to the foregoing repetition factor R), and a frequency domain shift (freqDomainShift) (which may correspond to the foregoing frequency domain shift). "freqHopping" represents frequency hopping, and may be configured by using parameters c (which may correspond to the foregoing index in the preset table) and b-hop (which may correspond to the foregoing $b_{hop}$). A data type of "startPosition" is an integer variable (integer), and a value range is, for example, 0 to 5. Data types of "nrofSymbols" and "repetitionFactor" are an enumerated type (enumerated), and may be, for example, n1, n2, or n4. A data type of "freqDomainShift" is an integer variable, and a value range is, for example, 0 to 268. A data type of "c" is an integer variable, and a value range is, for example, 0 to 63. A data type of "b-hop" is an integer variable, and a value range is, for example, 0 to 3.

For definitions of the parameters listed above, refer to the foregoing related descriptions for one group of configuration parameters. Details are not described again.

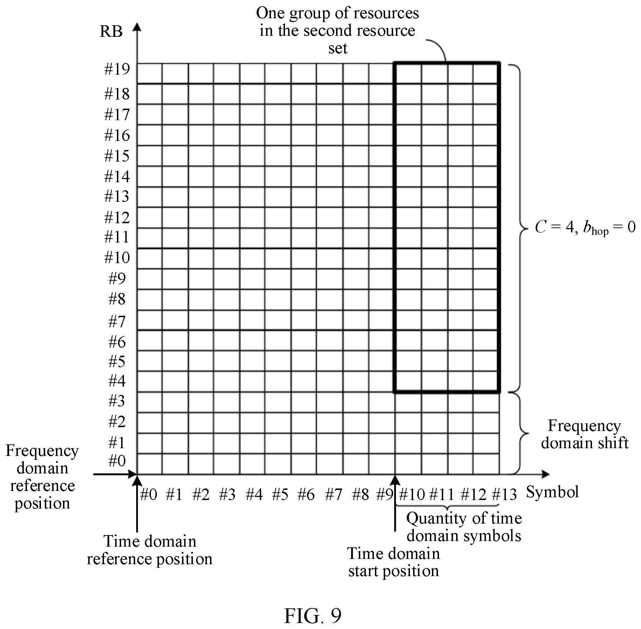

Based on the foregoing listed one group of configuration parameters, the terminal device may determine one group of resources. FIG. 9 shows an example of one group of resources in the second resource set according to an embodiment of this application. One group of resources included in the second resource set is a resource set including a plurality of consecutive frequency domain units and time domain units. One group of resources in the second resource set shown in FIG. 9 is determined based on the following parameters: A frequency domain shift is four RBs, a time domain start position is a symbol #10, a quantity of time domain symbols is 4, a preset table is Table 3, $C$ is 4, and $b_{hop}$ is 0. It can be learned that the frequency domain start position of the second resource set is an RB #5, a total bandwidth is 16 RBs, and a total of four time domain symbols from a symbol #10 to a symbol #13 are occupied in time domain.

It may be determined, based on the time domain start position and the quantity of time domain symbols being 4, that symbols occupied by the group of resources in time domain are symbols #10 to #13, and it may be determined, based on the frequency domain shift being four RBs, that a start RB in frequency domain is an RB #4. It may be determined, based on the preset table being Table 3, the index $C$ being 4, and $b_{hop}$ being 0, that a total bandwidth of the group of resources is 16 RBs, that is, RBs occupied in frequency domain are the RB #4 to an RB #19.

It should be understood that one group of resources in the second resource set shown in FIG. 9 may be alternatively configured based on another group of configuration parameters: A frequency domain shift is four RBs, a time domain start position is a symbol #10, a quantity of time domain symbols is 4, a preset table is Table 4, $C$ is 0, $X$ is 16, and $b_{hop}$ is 0.

It may be determined, based on the time domain start position and the quantity of time domain symbols being 4, that symbols occupied by the group of resources in time domain are symbols #10 to #13, and it may be determined, based on the frequency domain shift being four RBs, that a start RB in frequency domain is an RB #4. It may be determined, based on the preset table being Table 4, the index $C$ being 0, $X$ being 16, and $b_{hop}$ being 0, that a total bandwidth of the group of resources is 16 RBs, that is, RBs occupied in frequency domain are the RB #4 to an RB #19.

It should be understood that, in the parameters included in each group of configuration parameters listed above, the first information may indicate one or more of the parameters, and the remaining items that are not indicated by using the first information may be predefined in a protocol. In this way, indication overheads of signaling can be reduced.

It may be understood that FIG. 9 shows merely an example, and more groups of resources may be further determined based on different groups of configuration parameters. The second resource is from the target resource in the second resource set. If the network device configures a plurality of groups of configuration parameters, that is, configures a plurality of groups of resources, the network device may further indicate, by using signaling, a specific group of resources to be used as the target resource to determine the second resource.

It should be further understood that in the foregoing listed one group of configuration parameters, each group of configuration parameters may be used to configure one group of resources, and values of one or more parameters in any two groups of configuration parameters are different. For example, any two groups of configuration parameters have different values of at least one of the following parameters: a frequency domain shift, a time domain start position, a quantity of time domain symbols, a repetition factor, an index in a preset table, or $b_{hop}$.

It should be noted that, for the frequency domain shift and the time domain start position in any two groups of configuration parameters, frequency domain resources configured by using the two groups of configuration parameters may be determined based on a same reference frequency domain position, or may be determined based on different reference frequency domain positions. Time domain resources configured by using the two groups of configuration parameters may be determined based on a same reference time domain position, or may be determined based on different reference time domain positions. In other words, the reference frequency domain position and the reference time domain position may also be configured based on each group of resources.

Optionally, the method further includes step 630: The network device sends third information to the terminal device, where the third information indicates a target configuration parameter, and the target configuration parameter is used to determine the target resource. Correspondingly, the terminal device receives the third information.

For example, when the network device indicates a plurality of groups of configuration parameters by using the second information, each group of configuration parameters may correspond to one identifier, and the second information may specifically include a correspondence between a plurality of identifiers and the plurality of groups of configuration parameters. The network device may indicate, to the terminal device based on the correspondence by using the third information, an identifier corresponding to the target resource, so that the terminal device determines the target resource from the plurality of groups of resources based on the identifier indicated by the network device, and further determines the second resource. The identifier may be an index corresponding to a configuration parameter, a configuration parameter set ID, or another index value.

For ease of understanding and description, it is assumed herein that one group of resources shown in FIG. 9 is the target resource. The target resource may be configured based on one group of target configuration parameters. The target configuration parameters are specifically as follows: A frequency domain shift is four RBs, a preset table shown in Table 3 is used, $C=4$, $B=2$, $b_{hop}=0$, a time domain start position is a symbol #10, and a quantity of time domain symbols is 4. Assuming that the frequency domain shift is a frequency domain start position relative to a scheduled PUSCH, that is, a quantity of RBs by which the RB #0 in FIG. 9 is shifted, it may be determined that the target resource starts from the RB #4.

Although the index $C$ and the parameter $b_{hop}$ are configured for the target resource, in the preset table shown in Table 3, a frequency hopping bandwidth cannot be directly determined, and a frequency hopping start position cannot be determined. Therefore, a specific position of the second resource further needs to be determined with reference to the following parameters: a contiguous bandwidth (that is, a frequency hopping bandwidth, referred to as a frequency hopping bandwidth below) of the second resource on one time domain symbol and a start position of the second resource.

The frequency hopping bandwidth of the second resource may be represented by a quantity of frequency domain units included in the contiguous bandwidth, for example, represented by a quantity of RBs included in the frequency hopping bandwidth. In this embodiment, the quantity of frequency domain units included in the frequency hopping bandwidth of the second resource may be indicated by using a parameter in the preset table. For example, in the preset table shown in Table 3, the frequency hopping bandwidth of the second resource may be jointly configured by using $C$ and $B$. The foregoing second information has indicated a value of $C$ by using one group of configuration parameters. Therefore, the frequency hopping bandwidth of the second resource may be determined provided that a value of the parameter $B$ is configured. The value of the parameter $B$ may be configured by the network device, for example, configured by using DCI.

The value of the parameter $B$ may be configured by the network device, and the network device may flexibly select a frequency hopping bandwidth based on a resource occupation status and configure the frequency hopping bandwidth for the terminal device. Alternatively, the value of the parameter $B$ may be predefined in a protocol, and the frequency hopping bandwidth may be fixed. In this way, indication overheads of signaling can be reduced.

For another example, in the preset table shown in Table 4, the frequency hopping bandwidth of the second resource may be jointly configured by using the parameter $C$, the parameter $B$, and the parameter $W$. The foregoing second information has indicated a value of C by using one group of configuration parameters. Therefore, the frequency hopping bandwidth of the second resource may be determined provided that values of the parameter $B$ and the parameter $W$ are configured. The value of the parameter $B$ may be configured by the network device, for example, configured by using DCI. The value of the parameter $W$ may be predefined in a protocol, or may be configured by the network device, for example, configured by using an RRC message.

The start position of the second resource may be indicated by using a start frequency domain unit of the second resource, for example, a number representing an RB corresponding to the start position of the second resource, or may be indicated by using other information. In a possible design, the start position of the second resource may be indicated by using a position of the start RB of the second resource in the target resource. The target resource may be divided into one or more subbands in frequency domain. A quantity of frequency domain units included in each subband is the same as a quantity of frequency domain units included in the frequency hopping bandwidth. The subbands may be numbered in ascending order of RB numbers, so that a correspondence between different subbands and different indexes can be obtained. In this way, the start position of the second resource may be alternatively indicated by using an index of a subband corresponding to the start RB of the second resource in the target resource.

Similar to the foregoing value of the parameter *B*, the start position of the second resource may be configured by the network device, and the network device may flexibly select the start position of the second resource based on a resource occupation status and configure the start position of the second resource for the terminal device. Alternatively, the start position of the second resource may be predefined in a protocol. For example, the subband corresponding to the start RB of the second resource in the target resource may be fixed, for example, may be a 1st subband in the target resource, that is, a subband corresponding to an index value 0. The start position of the second resource is predefined, so that indication overheads of signaling can be reduced.

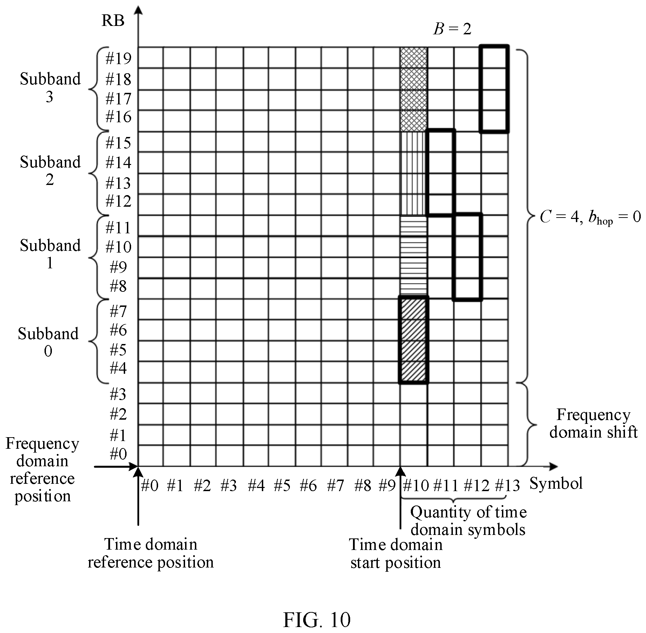

FIG. 10 is a diagram of a second resource determined based on a frequency hopping bandwidth and a start position of the second resource. In an example shown in FIG. 10, one group of resources shown in FIG. 9 is used as the target resource. It is assumed that the parameter *B* is 2. With reference to one row of parameters in which C is 3 in Table 3, it can be learned that a frequency hopping bandwidth of the second resource is four RBs. On a 1st time domain symbol of the target resource, if the frequency domain start position of the second resource is unknown, four resources that are identified by using four different filling patterns shown in FIG. 10 may be obtained. It is assumed that the start position of the second resource is a subband 0. Therefore, it may be determined that the second resource is shown in FIG. 10.

Based on the parameter *B* being 2, four resources that are identified by using four different filling patterns shown in FIG. 10 may be obtained, and a specific resource in the four resources that is the second resource may be further determined with reference to the start position of the second resource. It can be learned based on the frequency hopping bandwidth of the second resource being four RBs that the target resource may be divided from the frequency domain start position of the target resource by using four RBs as one subband, to obtain four subbands as follows: a subband 0, including an RB #4 to an RB #7; a subband 1, including an RB #8 to an RB #11; a subband 2, including an RB #12 to an RB #15; and a subband 3, including an RB #16 to an RB #19. 0, 1, 2, and 3 are respectively indexes of the four subbands. Assuming that the start position of the second resource is indicated as the subband 0, it may be determined that a frequency hopping start position of the second resource is the RB #4, and a frequency domain position of the first time of frequency hopping transmission is the RB #4 to the RB #7.

RBs occupied by the second resource on the 1st time domain symbol of the target resource, subcarriers occupied by the second resource on these RBs, and frequency domain resources occupied on subsequent time domain symbols may be further determined in the following manner by using the frequency hopping bandwidth and the start position of the second resource.

A shift of a start frequency domain unit of the second resource on an $n^{th}$ group of time domain symbols in the target resource relative to a frequency domain start unit of the target resource may be represented by $n_{offset}^{FH}$, and $n_{offset}^{FH}$ may satisfy $n_{offset}^{FH} = \sum_{b=0}^{B} m_b n_b$. A value range of n satisfies: $0 \leq n \leq \left\lceil \frac{N_t}{R} \right\rceil - 1$, $N_t$ represents the foregoing quantity of time domain symbols, and R represents the repetition factor. In another design, a value range of n may alternatively satisfy: $0 \leq n \leq \left\lfloor \frac{N_t}{R} \right\rfloor - 1$.

In addition, the shift $n_{offset}^{FH}$ is an RB-level shift. In another possible implementation, the shift may be defined as a subcarrier-level shift. In this case, $n_{offset}^{FH}$ satisfies $n_{offset}^{FH} = \sum_{b=0}^{B} m_b N_{SC}^{RB} n_b$.

The parameter $m_b$ indicates a quantity of frequency domain units included in the frequency hopping bandwidth, and a value of the parameter $n_b$ is related to the parameter $N_b$. Meanings of the parameter $m_b$ and the parameter $N_b$ have been described in detail above, and are not described again.

Optionally, an example in which the value of the parameter $n_b$ is related to the parameter $N_b$ is as follows:

The parameter $n_b$ satisfies: 
$$n_b = \begin{cases} \lfloor 4n_{RRC} / m_b \rfloor \bmod N_b, b \leq b_{hop} \\ \left( F_b(n) \right) + \lfloor 4n_{RRC} / m_b \rfloor \bmod N_b, b > b_{hop} \end{cases}.$$

$n_{RRC}$ in the formula is a higher layer parameter, and may be used to determine a start position of PUSCH frequency hopping transmission.

$F_b(n_{SRS})$ satisfies:

$$F_b(n_{SRS}) = \begin{cases} (N_b / 2) \left\lfloor \dfrac{n \bmod \Pi_{b'=b_{hop}}^{b} N_{b'}}{\Pi_{b'=b_{hop}}^{b-1} N_{b'}} \right\rfloor + \left\lfloor \dfrac{n \bmod \Pi_{b'=b_{hop}}^{b} N_{b'}}{2\Pi_{b'=b_{hop}}^{b-1} N_{b'}} \right\rfloor & \text{if } N_b \text{ even} \\ \lfloor N_b / 2 \rfloor \left\lfloor n / \Pi_{b'=b_{hop}}^{b-1} N_{b'} \right\rfloor & \text{if } N_b \text{ odd} \end{cases}.$$

That is, $F_b(n)$ satisfies $F_b(n) = (N_b / 2) \left\lfloor \dfrac{n \bmod \Pi_{b'=b_{hop}}^{b} N_{b'}}{\Pi_{b'=b_{hop}}^{b-1} N_{b'}} \right\rfloor + \left\lfloor \dfrac{n \bmod \Pi_{b'=b_{hop}}^{b} N_{b'}}{2\Pi_{b'=b_{hop}}^{b-1} N_{b'}} \right\rfloor$ when $N_b$ is an even number or satisfies $F_b(n) = \lfloor N_b / 2 \rfloor \left\lfloor n / \Pi_{b'=b_{hop}}^{b-1} N_{b'} \right\rfloor$ when $N_b$ is an odd number.

The $n^{th}$ group of time domain symbols may include R time domain symbols. As described above, R is the repetition factor, and the $n^{th}$ group of time domain symbols includes R time domain symbols. This means that the second resource occupies a same frequency domain resource in each group of time domain symbols. In other words, the terminal device may perform uplink transmission on a same frequency domain resource on R consecutive time domain symbols without frequency hopping.

In step 640, the terminal device performs uplink transmission on the PUSCH. Correspondingly, the network device performs uplink transmission on the PUSCH.

It may be understood that the terminal device may send uplink data on the PUSCH, and the network device may receive the uplink data on the PUSCH.

As described above, the PUSCH includes the first resource and the second resource, the first resource is a resource in the first resource set, and the second resource is a resource in the second resource set.

It may be understood that the terminal device and the network device need to perform uplink transmission on a same resource. In other words, the PUSCH determined by the terminal device is the same as the PUSCH determined by the network device. The terminal device and the network device may separately determine the PUSCH based on the foregoing configuration parameters and the preset table.

Optionally, the method further includes step 650: The terminal device and the network device separately determine the PUSCH.

For example, the terminal device and the network device may separately determine the first resource set based on the first information, and determine one or more groups of resources in the second resource set based on one or more groups of configuration parameters indicated by the second information. If the first information indicates one group of configuration parameters, one group of resources may be directly determined based on the first information, and the group of resources is the target resource that the second resource is from. If the first information indicates a plurality of groups of configuration parameters, the terminal device and the network device may further determine the target resource based on the third information. Then, the terminal device and the network device may determine a resource in the first resource set other than the second resource set as the first resource, and may determine the second resource based on the frequency hopping bandwidth of the PUSCH and the frequency hopping start position.

It should be noted that, in the foregoing diagram of overlapping between the first resource set and the second resource set shown in (a) and (b) in FIG. 7, the second resource set may fall within the first resource set, or may overlap some resources in the first resource set. In this embodiment, the first resource is a resource in the first resource set other than the second resource set. That is, regardless of whether the second resource set completely falls within the first resource set, the part of resources falling within the first resource set should be excluded, and should not be used as the first resource.

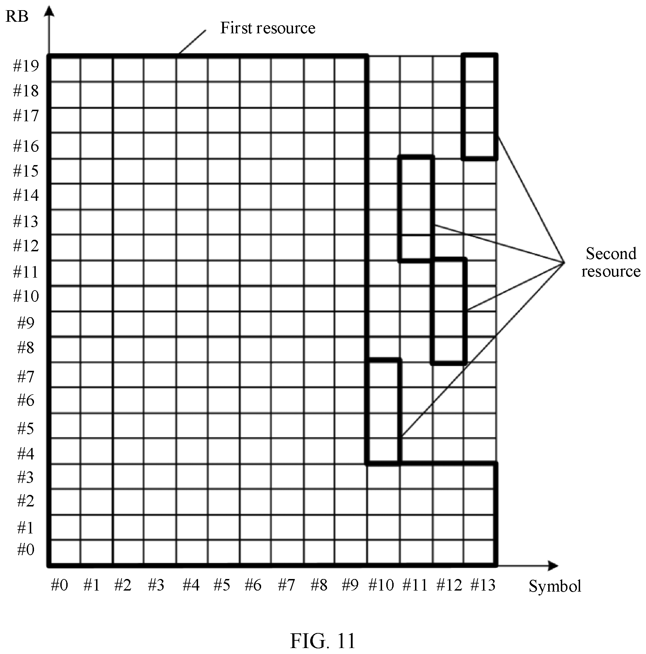

FIG. 11 is a diagram of the first resource and the second resource. Based on the configuration parameters (the frequency domain shift is four RBs, $C=4$, $B=2$, $b_{hop}=0$, the time domain start position is the symbol #10, and the quantity of time domain symbols is 4) in the foregoing example, the first resource set and the second resource set may be determined based on the first information and the second information, and then it may be determined that the first resource includes the RB #0 to the RB #19 on the time domain symbols #0 to #9, and the RB #0 to the RB #4 on the time domain symbols #10 to #13. It may be determined, based on the second information, the third information, the frequency hopping bandwidth of the PUSCH, and the start position of the PUSCH, that the second resource includes the RB #4 to the RB #7 on the time domain symbol #10, the RB #12 to the RB #15 on the time domain symbol #11, the RB #8 to the RB #11 on the time domain symbol #12, and the RB #16 to the RB #19 on the time domain symbol #13. For details, refer to bold-line boxes in FIG. 11. For a specific process of configuring the first resource set by using the first information, refer to an existing technology. Details are not described.

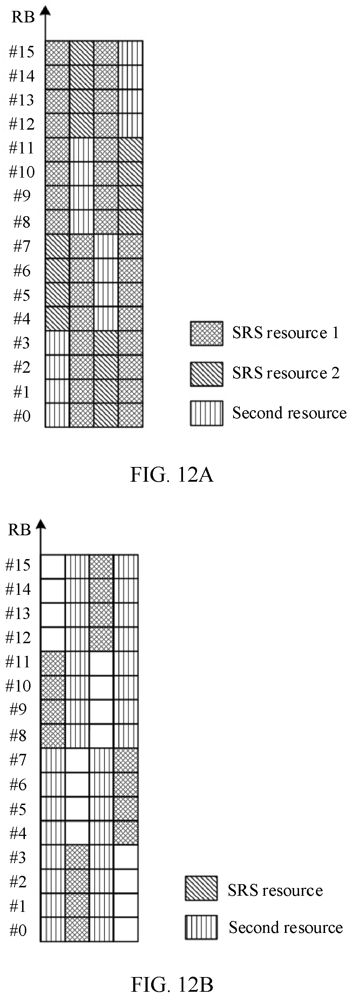

FIG. 12A is a diagram of an SRS resource and a PUSCH. The PUSCH shown in FIG. 12A is a PUSCH determined based on the method provided in this application. The SRS resource shown in FIG. 12A is configured by using the following parameters: $C_{SRS}$=4, $B_{SRS}$=2, and $b_{hop}$=0; and $C_{SRS}$=4, $B_{SRS}$=1, and $b_{hop}$=0. It is not difficult to learn that the network device configures two SRS resources by using two groups of parameters. It can be learned from the first group of parameters that: $b_{hop}<B_{SRS}$, a frequency hopping bandwidth of the SRS resource is four RBs, and a measurement bandwidth is 16 RBs; and it can be learned from the second group of parameters that: $b_{hop}<B_{SRS}$, a frequency hopping bandwidth of the SRS resource is eight RBs, and a measurement bandwidth is 16 RBs. An appropriate value of $n_{RRC}$ is configured, so that resource mapping can be performed on the two SRS resources on four same time domain symbols in the manner shown in FIG. 12A, without generating interference.

The two SRS resources are respectively identified by an SRS 1 and an SRS 2 in FIG. 12A. Because the two SRS resources occupy a same time domain symbol in time domain, and inconsecutively occupy a plurality of RBs in frequency domain, some resources in the four time domain symbols are idle. In this embodiment of this application, an area that is spanned by the two SRS resources in time domain and frequency domain may be configured as the second resource set, that is, 16 RBs from an RB #0 to an RB #15 on the four time domain symbols in the figure. Further, the frequency hopping bandwidth of the second resource is indicated as four RBs, and the start position of the second resource is indicated as a subband 0, so that a position of the second resource may be configured, as shown in the figure.

FIG. 12B is another diagram of an SRS resource and a PUSCH. The PUSCH shown in FIG. 12B is a PUSCH determined based on the method provided in this application. The SRS resource is configured by using the following parameters: $C_{SRS}$=4, $B_{SRS}$=2, and $b_{hop}$=0. It can be learned from the parameters that: $b_{hop}<B_{SRS}$, a frequency hopping bandwidth of the SRS resource is four RBs, and a measurement bandwidth is 16 RBs. The second resource of the PUSCH may be configured by using the following parameters: It is assumed that the preset table is Table 4, $C$=0, $b_{hop}$=0, $B$=1, $X$=16, and $W$=8. It can be learned from the parameters that: $b_{hop}<B$, a frequency hopping bandwidth of the second resource is eight RBs, and a bandwidth of the target resource is 16 RBs. An appropriate value of $n_{RRC}$ is configured for the SRS resource and the PUSCH, so that frequency hopping start positions of the SRS resource and the second resource may be different. For example, in the figure, frequency hopping of the SRS resource starts from an RB #8, and frequency hopping of the second resource starts from an RB #0, so that the SRS resource and the second resource are mapped to different RBs on a same time domain symbol.

It can be learned from FIG. 12A and FIG. 12B that, the second resource determined by using the method provided in this solution and the SRS resource exactly satisfy a nesting relationship, to ensure that sending is performed according to a unified frequency hopping rule during frequency hopping transmission, and no collision or interference is generated. In this solution, a feature of the SRS resource is used to avoid that a frequency domain resource is dynamically configured for each time domain symbol, and the second resource is configured by using a small quantity of configuration parameters, thereby implementing frequency domain resource configuration of the second resource at a time domain symbol level, so that PUSCH scheduling is more flexible, and resource utilization is improved.

It should be understood that, for ease of understanding and description, in FIG. 12A and FIG. 12B, frequency domain resources on four time domain symbols that may overlap the SRS resource are described, and relative positions of the SRS resource and the second resource are mainly described. Therefore, configuration parameters such as a frequency domain shift, a time domain start symbol, and a quantity of time domain symbols are not introduced. However, this should not constitute a limitation on this application. With reference to these parameters, the terminal device may accurately determine a position of the second resource in time domain and frequency domain.

In this application, the network device divides the PUSCH into two parts of resources for configuration, that is, the first resource set and the second resource set. The first resource set and the second resource set may be configured by using the first information and the second information respectively. Therefore, the first resource set and the second resource set may have different resource occupation statuses, in other words, may have different resource distribution statuses. The network device may configure resources for the first resource set and the second resource set by using different granularities. For example, the first resource set may be configured by using a plurality of time domain symbols as a granularity, and the second resource set may be configured by using one time domain symbol as a granularity. In this way, frequency domain resources scheduled on different time domain symbols may be the same or may be different. In this way, more flexible resource configuration can be implemented. Even if there may be some idle resource fragments in some scenarios, resource configuration may be performed by using this method, to fully utilize the resource fragments, thereby helping improve resource utilization.

The foregoing describes in detail the method provided in embodiments of this application with reference to a plurality of accompanying drawings. The following describes apparatuses provided in embodiments of this application with reference to the accompanying drawings.

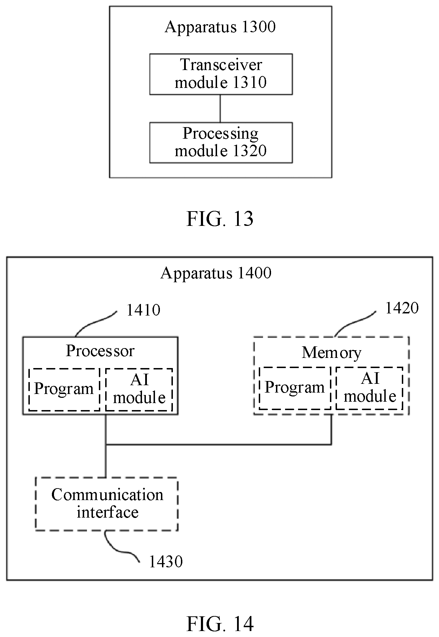

FIG. 13 to FIG. 16 are diagrams of possible apparatuses according to an embodiment of this application. These apparatuses may be configured to implement a function of the terminal device or the network device in the foregoing method embodiments. Therefore, beneficial effects of the foregoing method embodiments can also be achieved.

FIG. 13 is a block diagram of a communication apparatus according to an embodiment of this application. As shown in FIG. 13, the communication apparatus 1300 includes a transceiver module 1310 and a processing module 1320.

In a possible design, the communication apparatus 1300 is configured to implement the function of the terminal device in the method embodiment shown in FIG. 6. For example, the apparatus 1600 may correspond to the terminal device in FIG. 1.

For example, the transceiver module 1310 is configured to receive first information from a network device, where the first information is used to configure a first resource set; the transceiver module 1310 is further configured to receive second information from the network device, where the second information is used to configure a second resource set, and the first resource set and the second resource set have a resource overlap on at least one time domain symbol, or the first resource set and the second resource set do not overlap; and the transceiver module 1310 may be further configured to perform uplink transmission on a PUSCH, where the PUSCH includes a first resource and a second resource, the first resource is a resource in the first resource set other than the second resource set, and the second resource is a resource in the second resource set.

Optionally, the apparatus 1300 further includes the processing module 1320. The processing module 1320 is configured to determine the PUSCH.

Optionally, the second information further indicates one or more groups of configuration parameters, and each group of configuration parameters is used to configure one group of resources in the one or more groups of resources.

In an example, each group of configuration parameters indicated by the second information indicates one or more of the following: a frequency domain shift, an index in a preset table, a parameter $b_{hop}$, a time domain start position, a quantity of time domain symbols, or a repetition factor, where the frequency domain shift is a quantity of frequency domain units by which a frequency domain start position of one group of resources configured by using each group of configuration parameters is shifted relative to a reference frequency domain position, the preset table is used to define a value of a parameter $m_b$ and/or a value of a parameter $N_b$ corresponding to each of at least one index value, the parameter $m_b$ indicates a quantity of frequency domain units included in a contiguous bandwidth occupied on one time domain symbol by one group of resources configured by using each group of configuration parameters, the parameter $N_b$ is a ratio of a quantity of frequency domain units included in a previous-level bandwidth corresponding to the value of the parameter $m_b$ in the preset table to the quantity of frequency domain units included in the contiguous bandwidth corresponding to the value of the parameter $m_b$, $b$ is an integer value ranging from 0 to $B$, $0 \leq B < B_{max}$, a value of $B_{max}$ is defined in the preset table, the parameter $b_{hop}$ indicates one group of resources configured by using each group of configuration parameters, the time domain start position indicates a start time domain symbol of one group of resources configured by using each group of configuration parameters in time domain, the quantity of time domain symbols indicates a quantity of consecutive time domain symbols occupied by one group of resources configured by using each group of configuration parameters, and the repetition factor indicates a quantity of consecutive time domain symbols that occupy a same frequency domain resource in one group of resources configured by using each group of configuration parameters.

Optionally, the second resource is from a target resource, and the target resource is one group of resources in the one or more groups of resources.

Optionally, the transceiver module 1310 is further configured to receive third information from the network device, where the third information indicates a target configuration parameter in the one or more groups of configuration parameters, and the target configuration parameter is used to configure the target resource.

Optionally, a resource occupied by the second resource in the target resource is determined based on a start position and a quantity of frequency domain units included in a contiguous bandwidth of the second resource on one time domain symbol.

Optionally, the start position is indicated by an index of a subband corresponding to a start frequency domain unit of the second resource in the target resource, the target resource includes one or more subbands, and a quantity of frequency domain units included in each subband is the same as the quantity of frequency domain units included in the contiguous bandwidth.

Optionally, at least one of the quantity of frequency domain units included in the contiguous bandwidth or the start position is predefined, or at least one of the quantity of frequency domain units included in the contiguous bandwidth or the start position is configured by the network device.

Optionally, a shift $n_{offset}^{FH}$ of a start frequency domain unit of the second resource on an $n^{th}$ group of time domain symbols in the second resource set relative to a frequency domain start position of the second resource set satisfies

$$n_{offset}^{FH} = \sum_{b=0}^{B} m_b n_b$$

, where the $n^{th}$ group of time domain symbols includes R time domain symbols that are consecutive in time domain, a value of $n$ satisfies $0 \leq n \leq \left\lceil \dfrac{N_t}{R} \right\rceil - 1$, $N_t$ represents the quantity of time domain symbols, R represents the repetition factor, and a value of $n_b$ is related to the value of $n_b$.

Optionally, $n_b$ satisfies $n_b = \left\lfloor 4 n_{RRC} / m_b \right\rfloor \bmod N_b$ when $b \leq b_{hop}$ or satisfies

$n_b = \left( F_b(n) \right) + \left\lfloor 4 n_{RRC} / m_b \right\rfloor \bmod N_b$ when $b > b_{hop}$, $n_{RRC}$ is used to determine the start position, and $F_b(n)$ satisfies

$$F_b(n) = (N_b / 2) \left\lfloor \frac{n \bmod \Pi_{b'=b_{hop}}^{b} N_{b'}}{\Pi_{b'=b_{hop}}^{b-1} N_{b'}} \right\rfloor + \left\lfloor \frac{n \bmod \Pi_{b'=b_{hop}}^{b} N_{b'}}{2 \Pi_{b'=b_{hop}}^{b-1} N_{b'}} \right\rfloor$$ when $N_b$ is an even number or satisfies

$$F_b(n) = \left\lfloor N_b / 2 \right\rfloor \left\lfloor n / \Pi_{b'=b_{hop}}^{b-1} N_{b'} \right\rfloor$$ when $N_b$ is an odd number.

Optionally, the preset table includes rows corresponding to one or more index values in the foregoing Table 3, where $C$ represents an index, the previous-level bandwidth corresponding to the parameter $m_b$ in the preset table is a bandwidth corresponding to a parameter $m_{b-1}$ corresponding to a same index value, and $B_{max}$ is 4.

Optionally, the preset table includes at least one index value and at least one pattern corresponding to each index value; in the at least one pattern, different patterns correspond to different values of the parameter $m_b$ and/or different patterns correspond to different values of the parameter $N_b$; and the previous-level bandwidth corresponding to the parameter $m_b$ in the preset table is a bandwidth corresponding to a parameter $m_{b-1}$ corresponding to a same index value.

Further, in the preset table, $B_{max}$ is 2, and the parameter $m_b$ and the parameter $N_b$ satisfy at least one of the following relationships:

a value of the parameter $m_0$ is $\left\lfloor \dfrac{X}{W} \right\rfloor \cdot W$, and a value of the parameter $N_0$ is 1; or

a value of the parameter $m_1$ is $W$ RBs, and a value of the parameter Ni is $\left\lfloor \dfrac{X}{W} \right\rfloor$.

$W$ is a quantity of RBs included in a predefined contiguous bandwidth, $X$ is a quantity of RBs included in a total bandwidth occupied by the target resource, $X$ is greater than or equal to $W$, and both $W$ and $X$ are positive integers.

In another possible design, the communication apparatus 1300 is configured to implement the function of the network device in the method embodiment shown in FIG. 6. For example, the apparatus 1300 may correspond to the network device in FIG. 1.

For example, the transceiver module 1310 is configured to send first information to a terminal device, where the first information is used to configure a first resource set, and the first resource set occupies at least one symbol in time domain; the transceiver module 1310 is further configured to send second information to the terminal device, where the second information is used to configure a second resource set, the second resource set occupies at least one symbol in time domain, and the first resource set and the second resource set have a resource overlap on at least one symbol, or the first resource set and the second resource set do not overlap; and the transceiver module 1310 is further configured to perform uplink transmission on a PUSCH, where the PUSCH includes a first resource and a second resource, the first resource is a resource in the first resource set other than the second resource set, and the second resource is a resource in the second resource set.

Optionally, the apparatus 1300 further includes the processing module 1320. The processing module 1320 may be configured to generate the first information and the second information.

Optionally, the processing module 1320 is configured to determine the PUSCH.

Optionally, the second information further indicates one or more groups of configuration parameters, and each group of configuration parameters is used to configure one group of resources in the one or more groups of resources.

In an example, each group of configuration parameters indicated by the second information indicates one or more of the following: a frequency domain shift, an index in a preset table, a parameter $b_{hop}$, a time domain start position, a quantity of time domain symbols, or a repetition factor R, where the frequency domain shift is a quantity of frequency domain units by which a frequency domain start position of one group of resources configured by using each group of configuration parameters is shifted relative to a reference frequency domain position, the preset table is used to define values of a parameter $m_b$ and/or values of a parameter $N_b$ corresponding to different index values, the parameter $m_b$

indicates a quantity of frequency domain units included in a contiguous bandwidth occupied on one time domain symbol by one group of resources configured by using each group of configuration parameters, the parameter $N_b$ is a ratio of a quantity of frequency domain units included in a previous-level bandwidth corresponding to the value of the parameter $m_b$ in the preset table to the quantity of frequency domain units included in the contiguous bandwidth corresponding to the value of the parameter $m_b$, $b$ is an integer value ranging from 0 to $B$, $0 \leq B < B_{max}$, a value of $B_{max}$ is defined in the preset table, the parameter $b_{hop}$ indicates a total bandwidth occupied by the second resource set, the time domain start position indicates a start time domain symbol of one group of resources configured by using each group of configuration parameters in time domain, the quantity of time domain symbols indicates a quantity of consecutive time domain symbols occupied by one group of resources configured by using each group of configuration parameters, and the repetition factor indicates a quantity of consecutive time domain symbols that occupy a same frequency domain resource in one group of resources configured by using each group of configuration parameters.

Optionally, the second resource is from a target resource, and the target resource is one group of resources in the one or more groups of resources.

Optionally, the transceiver module 1310 is configured to send third information to the terminal device, where the third information indicates a target configuration parameter in the one or more groups of configuration parameters, and the target configuration parameter is used to configure the target resource.

Optionally, a resource occupied by the second resource in the target resource is determined based on a start position and a quantity of frequency domain units included in a contiguous bandwidth of the second resource on one time domain symbol.

Optionally, the start position is indicated by an index of a subband corresponding to a start frequency domain unit of the second resource in the target resource, the target resource includes one or more subbands, and a quantity of frequency domain units included in each subband is the same as the quantity of frequency domain units included in the contiguous bandwidth.

Optionally, at least one of the quantity of frequency domain units included in the contiguous bandwidth or the start position is predefined, or at least one of the quantity of frequency domain units included in the contiguous bandwidth or the start position is configured by the communication apparatus 1300.

Optionally, a shift $n_{offset}^{FH}$ of a start frequency domain unit of the second resource on an $n^{th}$ group of time domain symbols in the second resource set relative to a frequency domain start position of the second resource set satisfies

$$n_{offset}^{FH} = \sum_{b=0}^{B} m_b n_b \ .$$

The $n^{th}$ group of time domain symbols includes R time domain symbols that are consecutive in time domain, a value of n satisfies $0 \leq n \leq \left\lceil \dfrac{N_t}{R} \right\rceil - 1$, Nt represents the quantity of time domain symbols, R represents the repetition factor, Nt and R are positive integers, and a value of $n_b$ is related to the value of $n_b$.

Optionally, $n_b$ satisfies $n_b = \left\lfloor 4 n_{RRC} / m_b \right\rfloor \bmod N_b$ when $b \leq b_{hop}$ or satisfies $n_b = \left( F_b(n) \right) + \left\lfloor 4 n_{RRC} / m_b \right\rfloor \bmod N_b$ when $b > b_{hop}$, $n_{RRC}$ is used to determine the start position, and $F_b(n)$ satisfies $F_b(n) = (N_b / 2) \left\lfloor \dfrac{n \bmod \Pi_{b'=b_{hop}}^{b} N_{b'}}{\Pi_{b'=b_{hop}}^{b-1} N_{b'}} \right\rfloor + \left\lfloor \dfrac{n \bmod \Pi_{b'=b_{hop}}^{b} N_{b'}}{2 \Pi_{b'=b_{hop}}^{b-1} N_{b'}} \right\rfloor$ when $N_b$ is an even number or satisfies $F_b(n) = \left\lfloor N_b / 2 \right\rfloor \left\lfloor n / \Pi_{b'=b_{hop}}^{b-1} N_{b'} \right\rfloor$ when $N_b$ is an odd number.

Optionally, the preset table includes rows corresponding to one or more index values in the foregoing Table 3, where C represents an index, the previous-level bandwidth corresponding to the parameter $m_b$ in the preset table is a bandwidth corresponding to a parameter $m_{b-1}$ corresponding to a same index value, and $B_{max}$ is 4.

Optionally, the preset table includes at least one index value and at least one pattern corresponding to each index value; in the at least one pattern, different patterns correspond to different values of the parameter $m_b$ and/or different patterns correspond to different values of the parameter $N_b$; and the previous-level bandwidth corresponding to the parameter $m_b$ in the preset table is a bandwidth corresponding to a parameter $m_{b-1}$ corresponding to a same index value.

Further, in the preset table, $B_{max}$ is 2, and the parameter $m_b$ and the parameter $N_b$ satisfy at least one of the following relationships:

a value of the parameter $m_0$ is $\left\lfloor \dfrac{X}{W} \right\rfloor \cdot W$ , and a value of the parameter $N_0$ is 1; or

a value of the parameter $m_1$ is W RBs, and a value of the parameter $N_1$ is $\left\lfloor \dfrac{X}{W} \right\rfloor$ .

*W* is a quantity of RBs included in a predefined contiguous bandwidth, *X* is a quantity of RBs included in a total bandwidth occupied by the target resource, *X* is greater than or equal to *W,* and both *W* and *X* are positive integers.

For more detailed descriptions of the transceiver module 1310 and the processing module 1320, directly refer to related descriptions in any embodiment shown in FIG. 6. Details are not described herein again.

It should be noted that the communication apparatus 1300 may include a sending module, but does not include a receiving module. Alternatively, the communication apparatus 1300 may include a receiving module, but does not include a sending module. This may be specifically determined depending on whether the foregoing solution performed by the communication apparatus 1300 includes a sending action and a receiving action.

FIG. 14 is another block diagram of an apparatus according to an embodiment of this application. As shown in FIG. 14, the apparatus 1400 includes one or more processors 1410. The processor 1410 may be a general-purpose processor, a dedicated processor, or the like. For example, the processor may be a baseband processor or a central processing unit. The baseband processor may be configured to process a communication protocol and communication data. The central processing unit may be configured to control the apparatus (for example, a terminal device, a network device, or a chip), to execute a software program and process data of the software program.

Optionally, in a design, the processor 1410 may include a program (which may also be referred to as code or instructions). The program may be run on the processor 1410, to enable the apparatus 1400 to perform the method performed by the terminal device or the network device in the foregoing method embodiments. In another possible design, the apparatus 1400 includes a circuit (not shown in FIG. 14). The circuit is configured to implement a function of the terminal device or the network device in the foregoing method embodiments.

For example, the processor 1410 may be configured to execute a computer program or instructions in a memory, to implement steps performed by the terminal device or the network device in the embodiment shown in FIG. 6.

Optionally, the apparatus 1400 may include one or more memories 1420. The memory stores a program (which sometimes may also be referred to as code or instructions), and the program may be run on the processor 1410, to enable the apparatus 1400 to perform the method performed by the terminal device or the network device in the foregoing embodiments.

Optionally, the processor 1410 and/or the memory 1420 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a nearreal-time RIC or a non-real-time RIC.

Optionally, the processor 1410 and/or the memory 1420 may further store data. The processor and the memory may be separately disposed, or may be integrated together.

Optionally, the apparatus 1400 may further include a communication interface 1430. The processor 1410 sometimes may also be referred to as a processing unit, and control the apparatus (for example, a RAN node or a terminal). The communication interface 1430 sometimes may also be referred to as a transceiver unit, a transceiver machine, a transceiver circuit, a transceiver, or the like, and is configured to implement receiving and sending functions of the apparatus.

Optionally, the apparatus 1400 further includes a communication interface 1430. The processor 1410 and the communication interface 1430 are coupled to each other. It may be understood that the communication interface 1430 may be a transceiver or an input/output interface.

It may be understood that because the apparatus 1400 has a communication function, the apparatus may also be referred to as a communication apparatus.

When the apparatus 1400 is configured to implement the method shown in FIG. 6, the processor 1410 is configured to perform a function of the foregoing processing unit, and the communication interface 1430 is configured to perform a function of the foregoing transceiver module. Whether the communication interface 1430 is used for sending or receiving may be specifically determined based on whether the apparatus 1400 is configured to perform a sending action or a receiving action in the solution performed by the apparatus 1400.

When the apparatus 1400 is a chip used in a terminal device, the chip implements a function of the terminal device in the foregoing method embodiments. The chip of the terminal device receives a signal from another module (for example, a radio frequency module or an antenna) in the terminal device, and the signal may be sent by a network device to the

**EP 4 769 995 A1**

terminal device. Alternatively, the chip of the terminal device sends a signal to another module (for example, a radio frequency module or an antenna) in the terminal device, and the signal may be sent by the terminal device to a network device.

When the apparatus 1400 is a chip used in a network device, the chip implements a function of the network device in the foregoing method embodiments. The chip of the network device receives a signal from another module (for example, a radio frequency module or an antenna) in the network device, and the signal may be sent by a terminal device to the network device. Alternatively, the chip of the network device sends a signal to another module (for example, a radio frequency module or an antenna) in the network device, and the signal may be sent by the network device to a terminal device.

It may be understood that when the apparatus 1400 is a terminal device or a network device, the communication interface 1430 may be a transceiver, and may specifically include a transmitter and a receiver. The transmitter is configured to send a signal, and the receiver is configured to receive a signal. When the apparatus 1400 is a chip used in a terminal device or a network device, the communication interface 1430 may be an input/output circuit. The input circuit may be used for receiving, and the output interface may be used for sending.

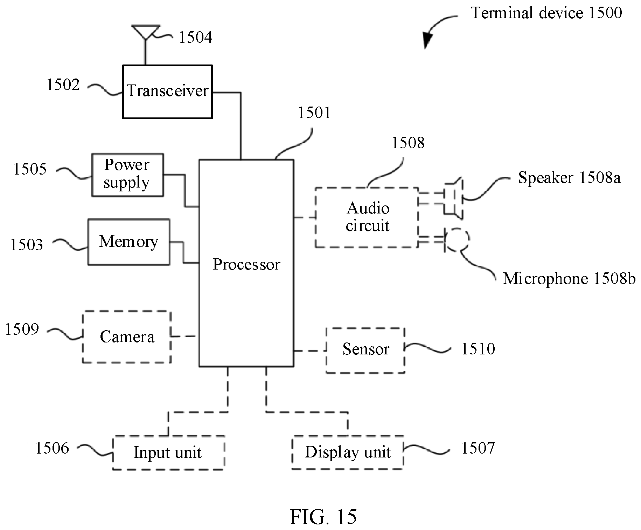

FIG. 15 is a diagram of a structure of a terminal device according to an embodiment of this application. As shown in FIG. 15, the terminal device 1500 may be used in the system shown in FIG. 1, to perform a function of the terminal device in the foregoing method embodiments. As shown in the figure, the terminal device 1500 includes a processor 1501 and a transceiver 1502. Optionally, the terminal device 1500 further includes a memory 1503. The processor 1501, the transceiver 1502, and the memory 1503 may communicate with each other by using an internal connection path, to transmit a control signal and/or a data signal. The memory 1503 is configured to store a computer program, and the processor 1501 is configured to invoke the computer program from the memory 1503 and run the computer program, to control the transceiver 1502 to receive a signal and send a signal. Optionally, the terminal device 1500 may further include an antenna 1504, configured to send, by using a radio signal, uplink data or uplink control signaling output by the transceiver 1502.

The processor 1501 and the memory 1503 may be combined into one processing apparatus, and the processor 1501 is configured to execute program code stored in the memory 1503 to implement the foregoing functions. During specific implementation, the memory 1503 may be integrated into the processor 1501, or may be independent of the processor 1501. The processor 1501 may correspond to the processing module in FIG. 13 or the processor in FIG. 14.

The transceiver 1502 may correspond to the transceiver module in FIG. 13 or the communication interface in FIG. 14, and may also be referred to as a transceiver unit. The transceiver 1502 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 1500 shown in FIG. 15 can implement processes related to the terminal device in the method embodiment shown in FIG. 6. Operations and/or functions of modules in the terminal device 1500 are used to implement corresponding procedures in the foregoing method embodiments. For details, refer to the description in the foregoing method embodiments. To avoid repetition, detailed description is appropriately omitted herein.

The processor 1501 may be configured to perform an action that is implemented inside the terminal device and that is described in the foregoing method embodiments, and the transceiver 1502 may be configured to perform an action that is of sending by the terminal device to the network device or receiving by the terminal device from the network device and that is described in the foregoing method embodiments. For details, refer to the descriptions in the foregoing method embodiments. Details are not described herein again.

Optionally, the terminal device 1500 may further include a power supply 1505, configured to supply power to various components or circuits in the terminal device. In this embodiment of this application, a rectifier may be connected between the power supply 1505 and the antenna 1504. After an electromagnetic wave signal is received by the antenna 1504 and converted into an alternating current signal, the alternating current signal may be further converted into a direct current signal by using the rectifier, and then the direct current signal is output to the power supply 1505.

In addition, to improve a function of the terminal device, the terminal device 1500 may further include one or more of an input unit 1506, a display unit 1507, an audio circuit 1508, a camera 1509, a sensor 1510, and the like. The audio circuit may further include a speaker 1508a, a microphone 1508b, and the like.

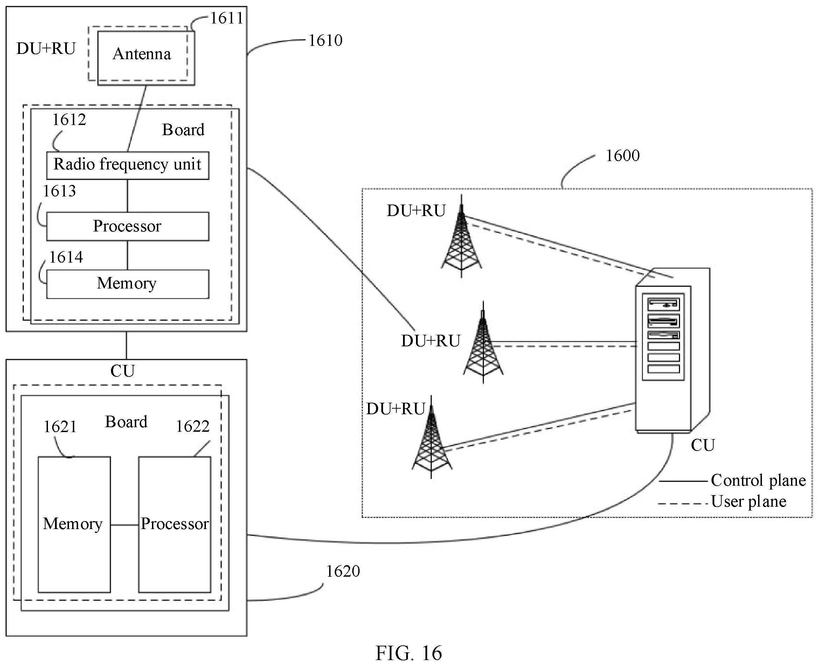

FIG. 16 is a diagram of a structure of a network device according to an embodiment of this application, for example, may be a diagram of a structure of a base station. The base station 1600 may be used in the system shown in FIG. 1 and perform a function of the first access network device or the second access network device in the foregoing method embodiments. As shown in the figure, the base station 1600 may include one or more of the following: one or more (DU+RU)s 1610 and one or more CUs 1620. The CU 1620 may communicate with a next generation core network (next generation core, NG core). The DU may include at least one antenna 1611, at least one radio frequency unit 1612, at least one processor 1613, and at least one memory 1614. The DU is mainly configured to receive and send radio frequency signals, convert a radio frequency signal and a baseband signal, and perform some baseband processing. The CU 1620 may include at least one processor 1622 and at least one memory 1621. The CU 1620 and the DU may communicate with each other through an interface. A control plane (control plane, CP) interface may be Fs-C, for example, F1-C, and a user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 1620 is mainly configured to perform baseband processing, control a base station, and the like. The DU and the CU 1620 may be physically disposed together, or may be physically disposed separately, namely, a distributed base station. The CU 1620 is a control center of the base station, may correspond to the processing module in FIG. 16 or the processor in FIG. 14, may also be referred to as a processing unit, and is mainly configured to complete a baseband processing function. For example, the CU 1620 may be configured to control the base station to perform the operation procedure about the access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of a protocol layer, for example, an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 1600 may include one or more radio frequency units (RU), one or more DUs, and one or more CUs. The DU may include at least one processor 1613 and at least one memory 1614, the RU may include at least one antenna 1611 and at least one radio frequency unit 1612, and the CU may include at least one processor 1622 and at least one memory 1621.

In an example, the CU 1620 may include one or more boards. A plurality of boards may jointly support a radio access network (for example, a 5G network) with a single access indication, or may separately support radio access networks (for example, an LTE network, a 5G network, or another network) with different access standards. The memory 1621 and the processor 1622 may serve one or more boards. In other words, a memory and a processor may be disposed on each board. Alternatively, a plurality of boards may share a same memory and a same processor. In addition, a necessary circuit may further be disposed on each board. The DU may include one or more boards. A plurality of boards may jointly support a radio access network (for example, a 5G network) with a single access indication, or may separately support radio access networks (for example, an LTE network, a 5G network, or another network) with different access standards. The memory 1614 and the processor 1613 may serve one or more boards. In other words, a memory and a processor may be disposed on each board. Alternatively, a plurality of boards may share a same memory and a same processor. In addition, a necessary circuit may further be disposed on each board.

It should be understood that the base station 1600 shown in FIG. 16 can implement processes related to the network device in the method embodiment shown in FIG. 6. Operations and/or functions of modules in the base station 1600 are used to implement corresponding procedures in the foregoing method embodiments. For details, refer to the description in the foregoing method embodiments. To avoid repetition, detailed description is appropriately omitted herein.

It should be understood that the base station 1600 shown in FIG. 16 is merely a possible architecture of a network device, and shall not constitute any limitation on this application. The method provided in this application is applicable to a network device in another architecture, for example, a network device including a CU, a DU, and an AAU. A specific architecture of the network device is not limited in this application.

It should be understood that FIG. 16 is merely an example rather than a limitation. The network device may not depend on the structure shown in FIG. 16. For example, the network device may include an AAU, and may further include a CU and/or a DU, or the network device may include a BBU, and may further include an adaptive radio unit (adaptive radio unit, ARU). This is not limited in this application.

The CU and/or the DU may be configured to perform an action that is implemented inside the network device and that is described in the foregoing method embodiments, and the AAU may be configured to perform an action that is of sending by the network device to the terminal device or receiving by the network device from the terminal device and that is described in the foregoing method embodiments. For details, refer to the descriptions in the foregoing method embodiments. Details are not described herein again.

It should be noted that, the foregoing method embodiments may be applied to a processor, or implemented by a processor. The processor may be an integrated circuit chip and has a signal processing capability. In an implementation process, steps in the foregoing method embodiments can be implemented by using a hardware integrated logic circuit in the processor, or by using instructions in a form of software.

The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor, or the like.

The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

This application further provides a chip system. The chip system includes at least one processor, configured to support implementation of a function of the terminal device or a function of the network device in any one of the foregoing method embodiments, for example, receiving, sending, or processing data and/or information in the foregoing method.

In a possible design, the chip system further includes a memory, the memory is configured to store program instructions and data, and the memory is located inside or outside the processor.

The chip system may include a chip, or may include a chip and another discrete component.

This application further provides a computer program product. The computer program product includes a computer program (which may also be referred to as code or instructions). When the computer program is run, the method performed by the terminal device or the method performed by the network device in the embodiment shown in FIG. 6 is performed.

This application further provides a computer-readable storage medium. The computer-readable storage medium stores a computer program (which may also be referred to as code or instructions). When the computer program is run, the method performed by the terminal device or the method performed by the network device in the embodiment shown in FIG. 6 is performed.

This application further provides a communication system. The communication system includes the foregoing terminal device and network device.

All or some of the methods provided in the foregoing embodiments may be implemented by software, hardware, firmware, or any combination thereof. When software is used to implement the methods, all or some of the methods may be implemented in a form of a computer program product. The computer program product may include one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1.  A communication method, comprising:

    receiving first information, wherein the first information is used to configure a first resource set;
    receiving second information, wherein the second information is used to configure a second resource set, and the first resource set and the second resource set have a resource overlap on at least one time domain symbol, or the first resource set and the second resource set do not overlap; and
    performing uplink transmission on a physical uplink shared channel PUSCH, wherein the PUSCH comprises a first resource and a second resource, the first resource is a resource in the first resource set other than the second resource set, and the second resource is a resource in the second resource set.

2.  The method according to claim 1, wherein the second resource set comprises one or more groups of resources, the second information indicates one or more groups of configuration parameters, and each group of configuration parameters is used to configure one group of resources in the one or more groups of resources.

3.  The method according to claim 2, wherein each group of configuration parameters indicates one or more of the following: a frequency domain shift, an index in a preset table, a parameter $b_{hop}$, a time domain start position, a quantity of time domain symbols, or a repetition factor R, wherein the frequency domain shift is a quantity of frequency domain units by which a frequency domain start position of one group of resources configured by using each group of configuration parameters is shifted relative to a reference frequency domain position, the preset table is used to define a value of a parameter $m_b$ and/or a value of a parameter $N_b$ corresponding to each of at least one index value, the parameter $m_b$ indicates a quantity of frequency domain units comprised in a contiguous bandwidth occupied on one time domain symbol by one group of resources configured by using each group of configuration parameters, the parameter $N_b$ is a ratio of a quantity of frequency domain units comprised in a previous-level bandwidth corresponding to the value of the parameter $m_b$ in the preset table to the quantity of frequency domain units comprised in the contiguous bandwidth corresponding to the value of the parameter $m_b$, b is an integer value ranging from 0 to B,

$0 \leq B < B_{max}$, a value of $B_{max}$ is defined in the preset table, the parameter $b_{hop}$ indicates a bandwidth occupied by one group of resources configured by using each group of configuration parameters, the time domain start position indicates a start time domain symbol of one group of resources configured by using each group of configuration parameters in time domain, the quantity of time domain symbols indicates a quantity of consecutive time domain symbols occupied by one group of resources configured by using each group of configuration parameters, and the repetition factor indicates a quantity of consecutive time domain symbols that occupy a same frequency domain resource in one group of resources configured by using each group of configuration parameters.

4. The method according to claim 3, wherein the second resource is from a target resource, and the target resource is one group of resources in the one or more groups of resources.

5. The method according to claim 4, wherein the method further comprises:
   receiving third information, wherein the third information indicates a target configuration parameter in the one or more groups of configuration parameters, and the target configuration parameter is used to configure the target resource.

6. The method according to claim 4 or 5, wherein a resource occupied by the second resource in the target resource is determined based on a start position and a quantity of frequency domain units comprised in a contiguous bandwidth of the second resource on one time domain symbol.

7. The method according to claim 6, wherein the start position is indicated by an index of a subband corresponding to a start frequency domain unit of the second resource in the target resource, the target resource comprises one or more subbands, and a quantity of frequency domain units comprised in each subband is the same as the quantity of frequency domain units comprised in the contiguous bandwidth.

8. The method according to claim 7, wherein at least one of the quantity of frequency domain units comprised in the contiguous bandwidth or the start position is predefined, or at least one of the quantity of frequency domain units comprised in the contiguous bandwidth or the start position is configured by a network device.

9. The method according to claim 7 or 8, wherein a shift $n_{offset}^{FH}$ of a start frequency domain unit of the second resource on an $n^{th}$ group of time domain symbols in the target resource relative to a frequency domain start position of the target resource satisfies $n_{offset}^{FH} = \sum_{b=0}^{B} m_b n_b$ , wherein

the $n^{th}$ group of time domain symbols comprises R time domain symbols that are consecutive in time domain, a value of $n$ satisfies $0 \leq n \leq \left\lceil \dfrac{N_t}{R} \right\rceil - 1$ , Nt represents the quantity of time domain symbols, R represents the repetition factor, Nt and R are positive integers, $n_b$ satisfies $n_b = \left\lfloor 4 n_{RRC} / m_b \right\rfloor \bmod N_b$ when $b \leq b_{hop}$ or satisfies $n_b = \left( F_b(n) \right) + \left\lfloor 4 n_{RRC} / m_b \right\rfloor \bmod N_b$ when $b > b_{hop}$, $n_{RRC}$ is used to determine the start position, and $F_b(n)$

satisfies $F_b(n) = (N_b / 2) \left\lfloor \dfrac{n \bmod \Pi_{b'=b_{hop}}^{b} N_{b'}}{\Pi_{b'=b_{hop}}^{b-1} N_{b'}} \right\rfloor + \left\lfloor \dfrac{n \bmod \Pi_{b'=b_{hop}}^{b} N_{b'}}{2 \Pi_{b'=b_{hop}}^{b-1} N_{b'}} \right\rfloor$ when $N_b$ is an even number or

satisfies $F_b(n) = \left\lfloor N_b / 2 \right\rfloor \left\lfloor n / \Pi_{b'=b_{hop}}^{b-1} N_{b'} \right\rfloor$ when $N_b$ is an odd number.

10. The method according to claim 9, wherein the preset table comprises rows corresponding to one or more index values in the following table:

| C | B = 0 | | B = 1 | | B = 2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 0 | 4 | 1 | 4 | 1 | 4 | 1 | 4 | 1 |
| 1 | 8 | 1 | 4 | 2 | 4 | 1 | 4 | 1 |

(continued)

| C | B = 0 | | B = 1 | | B = 2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |

wherein C represents an index, the previous-level bandwidth corresponding to the parameter $m_b$ in the preset table is a bandwidth corresponding to a parameter $m_{b-1}$ corresponding to a same index value, and $B_{max}$ is 4.

11. The method according to claim 9, wherein the preset table comprises at least one index value and at least one pattern corresponding to each index value; in the at least one pattern, different patterns correspond to different values of the parameter $m_b$ and/or different patterns correspond to different values of the parameter $N_b$; and the previous-level bandwidth corresponding to the parameter $m_b$ in the preset table is a bandwidth corresponding to a parameter $m_{b-1}$ corresponding to a same index value.

12. The method according to claim 11, wherein in the preset table, $B_{max}$ is 2, and the parameter $m_b$ and the parameter $N_b$ satisfy at least one of the following relationships:

a value of the parameter $m_0$ is $\left\lfloor \dfrac{X}{W} \right\rfloor \cdot W$ , and a value of the parameter $N_0$ is 1; or

a value of the parameter $m_1$ is $W$ RBs, and a value of the parameter $N_1$ is $\left\lfloor \dfrac{X}{W} \right\rfloor$ , wherein

$W$ is a quantity of RBs comprised in a predefined contiguous bandwidth, $X$ is a quantity of RBs comprised in a total bandwidth occupied by the target resource, $X$ is greater than or equal to $W$, and both $W$ and $X$ are positive integers.

13. A communication method, comprising:

sending first information, wherein the first information is used to configure a first resource set;
sending second information, wherein the second information is used to configure a second resource set, and the first resource set and the second resource set have a resource overlap on at least one time domain symbol, or the first resource set and the second resource set do not overlap; and
performing uplink transmission on a physical uplink shared channel PUSCH, wherein the PUSCH comprises a first resource and a second resource, the first resource is a resource in the first resource set other than the second resource set, and the second resource is a resource in the second resource set.

14. The method according to claim 13, wherein the second resource set comprises one or more groups of resources, the second information indicates one or more groups of configuration parameters, and each group of configuration parameters is used to configure one group of resources in the one or more groups of resources.

15. The method according to claim 14, wherein each group of configuration parameters indicates one or more of the following: a frequency domain shift, an index in a preset table, a parameter $b_{hop}$, a time domain start position, a quantity of time domain symbols, or a repetition factor, wherein the frequency domain shift is a quantity of frequency domain units by which a frequency domain start position of one group of resources configured by using each group of configuration parameters is shifted relative to a reference frequency domain position, the preset table is used to define a value of a parameter $m_b$ and/or a value of a parameter $N_b$ corresponding to each of at least one index value, the parameter $m_b$ indicates a quantity of frequency domain units comprised in a contiguous bandwidth occupied on one time domain symbol by one group of resources configured by using each group of configuration parameters, the parameter $N_b$ is a ratio of a quantity of frequency domain units comprised in a previous-level bandwidth corresponding to the value of the parameter $m_b$ in the preset table to the quantity of frequency domain units comprised in the contiguous bandwidth corresponding to the value of the parameter $m_b$, b is an integer value ranging from 0 to B, $0 \leq B < B_{max}$, a value of $B_{max}$ is defined in the preset table, the parameter $b_{hop}$ indicates a bandwidth occupied by one group of resources configured by using each group of configuration parameters, the time domain start position indicates a start time domain symbol of one group of resources configured by using each group of configuration parameters in time domain, the quantity of time domain symbols indicates a quantity of consecutive time domain symbols occupied by one group of resources configured by using each group of configuration parameters, and the repetition factor indicates a quantity of consecutive time domain symbols that occupy a same frequency domain resource in one group of resources configured by using each group of configuration parameters.

16. The method according to claim 15, wherein the second resource is from a target resource, and the target resource is one group of resources in the one or more groups of resources.

17. The method according to claim 16, wherein the method further comprises:
sending third information, wherein the third information indicates a target configuration parameter in the one or more groups of configuration parameters, and the target configuration parameter is used to configure the target resource.

18. The method according to claim 16 or 17, wherein a resource occupied by the second resource in the target resource is determined based on a start position and a quantity of frequency domain units comprised in a contiguous bandwidth of the second resource on one time domain symbol.

19. The method according to claim 18, wherein the start position is indicated by an index of a subband corresponding to a start frequency domain unit of the second resource in the target resource, the target resource comprises one or more subbands, and a quantity of frequency domain units comprised in each subband is the same as the quantity of frequency domain units comprised in the contiguous bandwidth.

20. The method according to claim 19, wherein at least one of the quantity of frequency domain units comprised in the contiguous bandwidth or the start position is predefined, or at least one of the quantity of frequency domain units comprised in the contiguous bandwidth or the start position is configured by a network device.

21. The method according to claim 19 or 20, wherein a shift $n_{offset}^{FH}$ of a start frequency domain unit of the second resource on an $n^{th}$ group of time domain symbols in the target resource relative to a frequency domain start position of the target resource satisfies $n_{offset}^{FH} = \sum_{b=0}^{B} m_b n_b$ , wherein

the $n^{th}$ group of time domain symbols comprises R time domain symbols that are consecutive in time domain, a value of n satisfies $0 \leq n \leq \left\lceil \dfrac{N_t}{R} \right\rceil - 1$ , Nt represents the quantity of time domain symbols, R represents the repetition factor, Nt and R are positive integers, $n_b$ satisfies $n_b = \left\lfloor 4 n_{RRC} / m_b \right\rfloor \bmod N_b$ when $b \leq b_{hop}$ or satisfies

$n_b = \left( F_b(n) \right) + \left\lfloor 4 n_{RRC} / m_b \right\rfloor \bmod N_b$ when $b > b_{hop}$, $n_{RRC}$ is used to determine the start position, and $F_b(n)$

satisfies $F_b(n) = (N_b / 2) \left\lfloor \dfrac{n \bmod \Pi_{b'=b_{hop}}^{b} N_{b'}}{\Pi_{b'=b_{hop}}^{b-1} N_{b'}} \right\rfloor + \left\lfloor \dfrac{n \bmod \Pi_{b'=b_{hop}}^{b} N_{b'}}{2 \Pi_{b'=b_{hop}}^{b-1} N_{b'}} \right\rfloor$ when $N_b$ is an even number or

satisfies $F_b(n) = \left\lfloor N_b / 2 \right\rfloor \left\lfloor n / \Pi_{b'=b_{hop}}^{b-1} N_{b'} \right\rfloor$ when $N_b$ is an odd number.

22. The method according to claim 21, wherein the preset table comprises rows corresponding to one or more index values in the following table:

| c | B = 0 | | B=1 | | B=2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 0 | 4 | 1 | 4 | 1 | 4 | 1 | 4 | 1 |

(continued)

| c | B = 0 | | B=1 | | B=2 | | B = 3 | |
|---|---|---|---|---|---|---|---|---|
| | $m_0$ | $N_0$ | $m_1$ | $N_1$ | $m_2$ | $N_2$ | $m_3$ | $N_3$ |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |

wherein C represents an index, the previous-level bandwidth corresponding to the parameter $m_b$ in the preset table is a bandwidth corresponding to a parameter $m_{b-1}$ corresponding to a same index value, and $B_{max}$ is 4.

23. The method according to claim 21, wherein the preset table comprises at least one index value and at least one pattern corresponding to each index value; in the at least one pattern, different patterns correspond to different values of the parameter $m_b$ and/or different patterns correspond to different values of the parameter $N_b$; and the previous-level bandwidth corresponding to the parameter $m_b$ in the preset table is a bandwidth corresponding to a parameter $m_{b-1}$ corresponding to a same index value.

24. The method according to claim 23, wherein in the preset table, $B_{max}$ is 2, and the parameter $m_b$ and the parameter $N_b$ satisfy at least one of the following relationships:

a value of the parameter $m_0$ is $\left\lfloor \dfrac{X}{W} \right\rfloor \cdot W$ , and a value of the parameter $N_0$ is 1; or

a value of the parameter $m_1$ is $W$ RBs, and a value of the parameter $N_1$ is $\left\lfloor \dfrac{X}{W} \right\rfloor$ , wherein

$W$ is a quantity of RBs comprised in a predefined contiguous bandwidth, $X$ is a quantity of RBs comprised in a total bandwidth occupied by the target resource, $X$ is greater than or equal to $W$, and both $W$ and $X$ are positive integers.

25. A communication apparatus, configured to implement the method according to any one of claims 1 to 12, or configured to implement the method according to any one of claims 13 to 24.

26. A communication apparatus, comprising a processor, wherein the processor is configured to execute program code, so that the method according to any one of claims 1 to 12 is performed, or the method according to any one of claims 13 to 24 is performed.

27. A computer-readable storage medium, wherein the computer-readable storage medium stores a computer program, and when the computer program is executed by a processor, the method according to any one of claims 1 to 12 is performed, or the method according to any one of claims 13 to 24 is performed.

28. A computer program product, comprising a computer program, wherein when the computer program is run, the method according to any one of claims 1 to 12 is performed, or the method according to any one of claims 13 to 24 is performed.

FIG. 1

$B_{SRS}=3$  $B_{SRS}=2$  $B_{SRS}=1$  $B_{SRS}=0$

| 4 RBs | | | |
|---|---|---|---|
| 4 RBs | 12 RBs | 24 RBs | 72 RBs |
| 4 RBs | | | |
| 4 RBs | 12 RBs | | |
| 4 RBs | | | |
| 4 RBs | | | |
| 4 RBs | 12 RBs | 24 RBs | |
| 4 RBs | | | |
| 4 RBs | 12 RBs | | |
| 4 RBs | | | |
| 4 RBs | 12 RBs | 24 RBs | |
| 4 RBs | | | |
| 4 RBs | 12 RBs | | |
| 4 RBs | | | |

$N_0 N_1 N_2 N_3 = 18$   $N_0 N_1 N_2 = 6$   $N_0 N_1 = 3$   $N_0 = 1$

FIG. 2

FIG. 3

FIG. 4

RBG

#7

#6

#5

#4

#3

#2

#1

#0

#0   #1   #2   #3   #4   #5   #6   #7   #8   #9   #10  #11  #12  #13   Symbol

PUSCH 1          PUSCH 2          SRS resource

FIG. 5

600

| Terminal device | | Network device |

610: First information, used to configure a first resource set

620: Second information, used to configure a second resource set

630: Third information, indicating a target configuration parameter

650: Determine a PUSCH

650: Determine a PUSCH

640: Uplink transmission on the PUSCH

FIG. 6

FIG. 7

FIG. 8

FIG. 9

FIG. 10

FIG. 11

FIG. 12A

FIG. 12B

Apparatus 1300

Transceiver
module 1310

Processing
module 1320

FIG. 13

Apparatus 1400

1410

1420

Processor

Program | AI
module

Memory

Program | AI
module

Communication
interface

1430

FIG. 14

FIG. 15

1600

1610

1611

1612

1613

1614

1620

1621

1622

DU+RU

DU+RU

DU+RU

DU+RU

CU

Antenna

Board

Radio frequency unit

Processor

Memory

CU

Board

Processor

Memory

Control plane

User plane

FIG. 16

## INTERNATIONAL SEARCH REPORT

| International application No. |
| --- |
| **PCT/CN2024/121890** |

### A. CLASSIFICATION OF SUBJECT MATTER

H04L5/00 (2006.01)i; H04W72/04(2023.01)i

According to International Patent Classification (IPC) or to both national classification and IPC

### B. FIELDS SEARCHED

Minimum documentation searched (classification system followed by classification symbols)

IPC:H04L: H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; 3GPP: 资源, 集合, 资源集, 重叠, 时域, 符号, 索引, 起始位置, 频域, 偏移量, 奇数, 偶数, resource, set, resource set, overlap, time field, signal, index, starting position, frequency field, offset, odd, even

### C. DOCUMENTS CONSIDERED TO BE RELEVANT

| Category* | Citation of document, with indication, where appropriate, of the relevant passages | Relevant to claim No. |
| --- | --- | --- |
| X | CN 108924932 A (HUAWEI TECHNOLOGIES CO., LTD.) 30 November 2018 (2018-11-30) description, paragraphs 84-335 | 1-8, 13-20, 25-28 |
| A | CN 110050427 A (HUAWEI TECHNOLOGIES CO., LTD.) 23 July 2019 (2019-07-23) entire document | 1-28 |
| A | US 2021360631 A1 (COMCAST CABLE COMMUNICATIONS, LLC) 18 November 2021 (2021-11-18) entire document | 1-28 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2024** | **25 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121890**

| Patent document cited in search report | | | Publication date (day/month/year) | Patent family member(s) | | | Publication date (day/month/year) |
|---|---|---|---|---|---|---|---|
| CN | 108924932 | A | 30 November 2018 | EP | 3866529 | A1 | 18 August 2021 |
| | | | | EP | 3866529 | B1 | 23 October 2024 |
| | | | | WO | 2019091135 | A1 | 16 May 2019 |
| CN | 110050427 | A | 23 July 2019 | EP | 3504819 | A1 | 03 July 2019 |
| | | | | CA | 3035020 | A1 | 17 May 2019 |
| | | | | CA | 3035020 | C | 07 March 2023 |
| | | | | US | 2019281487 | A1 | 12 September 2019 |
| | | | | US | 11399299 | B2 | 26 July 2022 |
| | | | | JP | 2020501386 | A | 16 January 2020 |
| | | | | JP | 6777342 | B2 | 28 October 2020 |
| | | | | US | 2023422073 | A1 | 28 December 2023 |
| | | | | US | 12082034 | B2 | 03 September 2024 |
| | | | | BR | 112019007177 | A2 | 26 May 2020 |
| | | | | WO | 2019099857 | A1 | 23 May 2019 |
| | | | | US | 2022369148 | A1 | 17 November 2022 |
| | | | | US | 11716647 | B2 | 01 August 2023 |
| US | 2021360631 | A1 | 18 November 2021 | EP | 3910831 | A1 | 17 November 2021 |
| | | | | CA | 3118927 | A1 | 14 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311290302